# EUROPÄISCHE PATENTSCHRIFT

(11) **EP 2 507 458 B1**
(45) Veröffentlichungstag und Bekanntmachung des Hinweises auf die Patenterteilung: **01.08.2018**
(21) Anmeldenummer: 10787304.4
(22) Anmeldetag: 30.11.2010
(51) Int. Cl.: E05F 3/10, E05F 3/22

(54) **TÜRSCHLIESSER MIT MAGNETWEGEVENTIL**
DOOR CLOSER HAVING A MAGNETIC DISTRIBUTION VALVE
FERME-PORTE A ELECTRO-DISTRIBUTEUR

(30) Priorität: 01.12.2009 DE 102009056265; 01.04.2010 DE 102010013853
(43) Veröffentlichungstag der Anmeldung: 10.10.2012
(73) Patentinhaber: dormakaba Deutschland GmbH, 58256 Ennepetal (DE)
(72) Erfinder: SALUTZKI, Thomas, 58456 Witten (DE); BIENEK, Volker, 44143 Dortmund (DE)
(74) Vertreter: Balder IP Law, S.L.
(86) Internationale Anmeldenummer: PCT/EP2010/007250
(87) Internationale Veröffentlichungsnummer: WO 2011/066943

(56) Entgegenhaltungen:
- WO-A1-2006/066666
- DE-A1-102005 047 339
- DE-C1- 3 423 242
- US-A- 4 115 897
- US-A- 4 611 631

## Beschreibung

Die Erfindung betrifft einen Türschließer mit einem Magnetwegeventil.

Der Stand der Technik unterscheidet zwischen Türschließern und Türantrieben. Bei Türschließern muss die Tür von einer Person manuell geöffnet werden. Während des Öffnungsvorgangs wird Energie, beispielsweise in einer Schließerfeder, gespeichert und der Türschließer kann die Tür selbstständig durch die gespeicherte Energie wieder schließen. Im Gegensatz dazu ist der Türantrieb eine Anordnung, die mittels zusätzlicher Hilfsenergie, zum Beispiel mittels Elektromotor und Hydraulik, die Tür automatisch öffnet und wieder schließt. Insbesondere bei der Betrachtung der Hydraulikkreisläufe in Türantrieben und Türschließern stellt man signifikante Unterschiede fest. Bei elektromechanischen Türantrieben sind stets ein Motor und eine Pumpe vorhanden, die den erforderlichen Hydraulikdruck aufbringen. Die entsprechenden Druckkammern werden dann aktiv mit Hydraulikdruck beaufschlagt, wodurch das Öffnen der Tür bewirkt wird. Der Druck wird somit im Türantrieb von den internen Komponenten, Motor und Pumpe, erzeugt. Im Gegensatz dazu füllen sich Druckkammern in einem Türschließer durch Expansion der Kammern und durch Ansaugen des Hydrauliköls aus anderen Räumen des Türschließers. Hier wird durch Öffnen der Tür die Energie für die Schließerfeder und für den Druckaufbau in den Türschließer eingebracht. Die Kraft- und Momentenverläufe sowie die auftretenden Belastungen sind infolgedessen bei einem Türschließer und bei einem Türantrieb meist unterschiedlich. Der Türantrieb muss die Energie für die Beschleunigung der Tür in Öffnungsrichtung zusätzlich aufbringen, während die Tür beim Türschließer in Öffnungsrichtung vom Benutzer beschleunigt wird.

Gattungsgemäße Türschließer sind beispielsweise aus US4115897A, DE3423242C1 oder WO2006/066666A1 bekannt. WO-2006/66666 offenbart die Merkmale des Oberbegriffs des Anspruchs 1. Es ist Aufgabe vorliegender Erfindung, einen Türschließer bereitzustellen, der bei kostengünstiger Herstellung sehr schmal aufgebaut ist und somit auch als integrierbarer Türschließer in beispielsweise einer Zarge oder einer Tür Verwendung findet. Darüber hinaus soll der Türschließer eine Feststellfunktion oder Freilauffunktion aufweisen.

Die Aufgabe wird gelöst durch die Merkmale des unabhängigen Anspruchs 1. Die abhängigen Ansprüche haben vorteilhafte Weiterbildungen der Erfindung zum Gegenstand.

Somit wird die Aufgabe gelöst durch einen Türschließer, insbesondere Drehtürschließer, mit Feststellfunktion oder Freilauffunktion, umfassend ein Türschließergehäuse, eine mit einer Tür verbindbare Abtriebswelle, eine mit der Abtriebswelle verbundene und im Türschließergehäuse geführte Kolbenbaugruppe, eine Schließerfeder, eine zur Verbindung der Kolbenbaugruppe mit der Schließerfeder angeordnete Kolbenstange, und einen zum Blockieren der Schließerfeder ausgebildeten hydraulischen Sperrraum. Ferner umfasst der Türschließer ein Magnetwegeventil, insbesondere ein 3/2-Magnetwegeventil, wobei auf einer der Kolbenstange abgewandten Seite der Kolbenbaugruppe, insbesondere auf der Seite eines Dämpfungskolbens, ein Schließdämpfungsraum zwischen dem Türschließergehäuse und der Kolbenbaugruppe ausgebildet ist. Das Magnetwegeventil steuert erfindungsgemäß zumindest die Drücke im Schließdämpfungsraum und im Sperrraum.

Bevorzugt umfasst der Türschließer zur Ausbildung der Freilauffunktion eine Freilaufanordnung, welche dazu ausgebildet ist, eine translatorische Bewegung der Kolbenbaugruppe entkoppelt von der Schließerfeder bei blockierter Schließerfeder zu ermöglichen. Alternativ ist bei der Feststellfunktion die Schließerfeder fest mit der Kolbenbaugruppe verwunden, sodass durch das Blockieren der Schließerfeder gleichzeitig die Kolbenbaugruppe und somit die Tür arretiert sind.

Das Magnetwegeventil ermöglicht es, den Sperrraum hydraulisch abzudichten. Dadurch kann sich die einmal vorgespannte Schließerfeder nicht mehr entspannen und die Freilauffunktion des Türschließers ist aktiviert. Durch ein Schalten des Magnetwegeventils wird der Sperrraum wieder druckentlastet und die Schließerfeder kann, beispielsweise im Brandfall, die Kolbenbaugruppe verschieben und somit über die Abtriebswelle die Tür schließen.

Bevorzugt kommt der Türschließer mit Freilauffunktion in Einrichtungen für körperbehinderte Menschen, Seniorenwohnungen oder Kindergärten sowie zur Absicherung an Brandschutztüren zum Einsatz. In Kombination mit einer Brandmeldeanlage wird die Schließung dieser Türen zur Vermeidung von Rauch- und Feuerausbreitung abgesichert, ohne den Türnutzern ein ständiges Öffnungsmoment herkömmlicher Türschließer zumuten zu müssen. Insbesondere bei Brandschutztüren müssen sehr starke Schließerfedern eingesetzt werden, sodass auch bei einem Luftzug in Gängen ein sicheres Schließen der Tür sichergestellt werden kann. Das Spannen dieser Schließerfedern bei jedem Öffnen der Tür ist insbesondere Kindern, kranken Menschen und Senioren nicht zuzumuten. Die Freilauffunktion ermöglicht hier, dass die Schließerfeder nur einmalig vorgespannt wird und bis zum etwaigen Brandfall vorgespannt bleibt. Der vorgestellte Türschließer kann aufgrund der sehr schmalen Baubreite unsichtbar im Türblatt oder in der Zarge eingesetzt werden, was keinerlei optische Beeinträchtigung mit sich bringt und vor Beschädigung durch Vandalismus schützt. Der Türschliesser umfasst eine im Türschließergehäuse zwischen der Kolbenbaugruppe und der Schließerfeder angeordnete fluiddichte Trennwand, wobei die Kolbenstange fluiddicht durch die Trennwand verläuft. Die Trennwand ist gegenüber dem Türschließergehäuse ortsfest und abgedichtet. Zwischen der Kolbenstange und der Trennwand wird bevorzugt eine Gleitringdichtung verwendet.

Des Weiteren umfasst der Türschließer einen im Türschließergehäuse geführten und an der Schließerfeder anliegenden Schließerfederspannkolben. Die Kolbenstange überträgt somit die Kraft von der Kolbenbaugruppe auf den Schließerfederspannkolben. Am Schließerfederspannkolben liegt die Schließerfeder an.

In vorteilhafter Weise ist zwischen der Trennwand und dem Schließerfederspannkolben der Sperrraum ausgebildet. Auf der einen Seite der Trennwand befindet sich somit die Kolbenbaugruppe mit der Abtriebswelle. Die Kolbenstange überträgt die Kräfte durch die Trennwand hindurch auf die andere Seite. Dort sind der Sperrraum, der Schließerfederspannkolben und die Schließerfeder angeordnet.

Für die im Türschließermechanismus enthaltene Freilauffunktion muss die Schließerfeder, auch Energiespeicherfeder genannt, mittels des hydraulischen Sperrraums in vorgespannter Lage gehalten werden, um die sofortige Schließung der Tür nach der manuellen Öffnungsbetätigung zu verhindern. Da die Wirkrichtung der Schließerfeder über die Kolbenbaugruppe auf die Abtriebswelle gerichtet ist, wird bevorzugt der zusätzliche Schließerfederspannkolben eingesetzt, der über die Kolbenstange auf die Kolbenbaugruppe einwirkt. In Verbindung mit der Kolbenstange und der Trennwand entsteht somit der hydraulische Sperrraum zur hydraulischen Arretierung der Schließerfeder. Die Kolbenstange erstreckt sich durch den Sperrraum, wodurch der Sperrraum auch als Ringraum zu bezeichnen ist. An diesem Aufbau des erfindungsgemäßen Türschiebers ist ein entscheidender Unterschied zwischen vorbekannten Türantrieben und dem hier vorgestellten Türschließer gut zu erläutern. Beim vorbekannten Türantrieb wird von einer Hydraulikpumpe aktiv unter Druck gesetztes Ölvolumen in die Druckräume gepumpt und somit über einen Federspannkolben eine Energiespeicherfeder vorgespannt. Im Gegensatz hierzu wird beim vorgestellten Türschließer das dem Hub entsprechende Ölvolumen während des manuellen Öffnungsvorgangs aus anderen Gehäusebereichen in den Sperrraum verdrängt und der Abfluss aus dem Sperrraum wird zum Beispiel über ein Magnetventil gesperrt. Somit wird bei dem hier vorgestellten Türschließer die gespeicherte Kraft der Schließerfeder über den Öldruck aufgenommen und kann nicht über die Kolbenbaugruppe Drehmoment auf die Abtriebswelle einleiten.

Bevorzugt ist vorgesehen, dass die Freilaufanordnung als Verschiebekupplung ausgebildet ist, welche ausschließlich Druckkräfte zwischen der Schließerfeder und der Kolbenbaugruppe überträgt. Für die Freilauffunktion darf keine feste Verbindung zwischen der Schließerfeder und Kolbenbaugruppe bestehen. Bevorzugt wird deshalb eine schiebende Verbindung eingesetzt, die ausschließlich Druckkräfte überträgt. Weiterhin ist vorgesehen, dass vom Sperrraum eine erste hydraulische Leitung, insbesondere eine Druckleitung P, zum Magnetwegeventil führt, vom Schließdämpfungsraum eine zweite hydraulische Leitung, insbesondere eine Arbeitsleitung A, zum Magnetwegeventil führt, und vom Magnetwegeventil eine dritte hydraulische Leitung, insbesondere Tankleitung T, zu einem Tankraum führt. Die hydraulischen Leitungen erstrecken sich bevorzugt im Wesentlichen parallel zur Türschließerlängsachse und sind in das Gehäuse des Türschließers integriert.

In vorteilhafter Ausführung ist ein Öffnungsdämpfungsraum zwischen der Kolbenbaugruppe und der Trennwand und/oder zwischen der Kolbenbaugruppe und dem Zusatzkolben ausgebildet. Dabei befindet sich eine erste gedrosselte Verbindung zwischen dem Öffnungsdämpfungsraum und dem Tankraum. Der Zusatzkolben kann durchbrochen sein oder muss nicht dicht im Türschließergehäuse geführt sein, sodass sich der Öffnungsdämpfungsraum auf die Räume zwischen Kolbenbaugruppe und Zusatzkolben und zwischen Zusatzkolben und Trennwand erstreckt. Beim Öffnen der Tür verdrängt die Kolbenbaugruppe Hydrauliköl aus dem Öffnungsdämpfungsraum. Das Hydrauliköl fließt über die erste gedrosselte Verbindung, und insbesondere über die dritte Leitung, in den Tankraum.

In bevorzugter Ausführung des Öffnungsdämpfungsraums ist vorgesehen, dass eine erste ungedrosselte Verbindung zwischen dem Öffnungsdämpfungsraum und dem Tankraum angeordnet ist, wobei die erste gedrosselte Verbindung stets offen ist und die erste ungedrosselte Verbindung je nach Stellung der Kolbenbaugruppe durch die Kolbenbaugruppe verschlossen oder offen ist. Die erste ungedrosselte Verbindung tritt bevorzugt zwischen der ersten gedrosselten Verbindung und der Abtriebswelle in den Öffnungsdämpfungsraum ein. Dadurch kann das Hydrauliköl zu Beginn des Öffnungsvorgangs der Tür über die erste ungedrosselte Verbindung in den Tankraum abfließen. Infolgedessen ist die Tür zu Beginn des Öffnungsvorgangs sehr leicht und widerstandsfrei zu öffnen. Ab einem bestimmten Öffnungswinkel verschließt die Kolbenbaugruppe, insbesondere der Öffnungskolben, die erste ungedrosselte Verbindung. Infolgedessen kann das Hydrauliköl nur noch über die erste gedrosselte Verbindung in den Tankraum abfließen und die Tür wird kurz vor Erreichen ihrer Endlage bei der Öffnung gedämpft.

Bevorzugt umfasst der Türschließer eine weitere gedrosselte Verbindung, welche zwischen dem Schließdämpfungsraum und dem Tankraum, insbesondere in der dritten Leitung, angeordnet ist. Diese weitere gedrosselte Verbindung dient zur Dämpfung der Tür in Schließrichtung.

In bevorzugter Ausführung ist vorgesehen, dass das Magnetwegeventil in einer ersten Schaltstellung die erste Leitung mit der dritten Leitung verbindet und die zweite Leitung blockiert, in einer zweiten Schaltstellung wird die zweite Leitung mit der dritten Leitung verbunden und die erste Leitung blockiert. Dadurch ist in der ersten Schaltstellung die Druckleitung P und somit der Sperrraum mit der Tankleitung T verbunden. Die Arbeitsleitung A und somit der Schließdämpfungsraum sind blockiert. In dieser Schaltstellung ist die Schließerfeder bzw. der Schließerfederspannkolben nicht blockiert und die Freilauffunktion deaktiviert. Durch Blockieren der Arbeitsleitung A kann Hydrauliköl aus dem Schließdämpfungsraum nur noch über die weitere gedrosselte Verbindung in den Tankraum abfließen und der Schließvorgang der Tür ist somit stets gedämpft. In der zweiten Schaltstellung wird die Druckleitung P des Sperrraumes blockiert und die Arbeitsleitung A des Schließdämpfungsraumes mit der Tankleitung verbunden. Dadurch ist die Schließerfeder hydraulisch arretiert und die Freilauffunktion aktiviert. Die Schließerfeder kann in dieser Schaltstellung keine Kraft auf die Kolbenbaugruppe übertragen. Gleichzeitig wird die Schließerdämpfung deaktiviert und die Kolbenbaugruppe ist somit frei beweglich und die Tür kann ohne großen Kraftaufwand bewegt werden. Diese Ausführung der hydraulischen Steuerung stellt die bevorzugte Ausführungsform dar.

In einer alternativen hydraulischen Steuerung ist vorgesehen, dass das Magnetventil in einer ersten Schaltstellung die erste Leitung mit der zweiten Leitung verbindet, und in einer zweiten Schaltstellung die zweite Leitung mit der dritten Leitung verbindet und die erste Leitung blockiert. In der ersten Schaltstellung wird somit die Druckleitung P des Sperrraumes mit der Arbeitsleitung A des Schließdämpfungsraums verbunden. In dieser Schaltstellung entspannt sich die Schließerfeder und verdrängt das Hydrauliköl aus dem Sperrraum. Durch die erste Schaltstellung wird der Sperrraum auf das gleiche Druckniveau wie der Schließdämpfungsraum gesetzt. Durch diese Addition der verdrängten Ölvolumen wird eine sehr funktionssichere Regulierung der Schließgeschwindigkeit erreicht. Das Öl beider Räume, des Sperrraums und des Schließdämpfungsraums, fließt gemeinsam über die weitere gedrosselte Verbindung des Schließdämpfungsraumes in den Tankraum ab. In der zweiten Schaltstellung ist die Druckleitung P des Sperrraumes blockiert, wodurch wieder die Freilauffunktion aktiviert wird. Die Arbeitsleitung A des Schließdämpfungsraumes ist mit der Tankleitung verbunden, wodurch die Schließdämpfung im Freilauf deaktiviert ist.

In vorteilhafter Ausführung ist vorgesehen, dass das Magnetventil im unbestromten Zustand die Schließerfeder freigibt und im bestromten Zustand den Freilauf ermöglicht. Durch dieses Ruhestromprinzip wird sichergestellt, dass bei Stromausfall die Tür mittels der in der Schließerfeder gespeicherten Energie schließt.

Im Folgenden wird die Erfindung anhand der begleitenden Zeichnung genauer erläutert. Dabei zeigt:
- Fig. 1: einen erfindungsgemäßen Türschließer nach einem ersten Ausführungsbeispiel,
- Fig. 2: einen erfindungsgemäßen Türschließer bei geschlossener Türstellung bei 0° Öffnungswinkel mit inaktivem Freilauf für alle Ausführungsbeispiele,
- Fig. 3: einen erfindungsgemäßen Türschließer bei geöffneter Türstellung bei 150° Öffnungswinkel mit inaktivem Freilauf für alle Ausführungsbeispiele,
- Fig. 4: einen erfindungsgemäßen Türschließer bei geschlossener Türstellung bei 0° Öffnungswinkel mit aktiviertem Freilauf für alle Ausführungsbeispiele,
- Fig. 5: einen erfindungsgemäßen Türschließer während des Öffnungsvorgangs mit aktiviertem Freilauf für alle Ausführungsbeispiele,
- Fig. 6: eine Detailansicht des Freilaufs gemäß dem ersten Ausführungsbeispiel,
- Fig. 7: einen erfindungsgemäßen Türschließer nach einem zweiten Ausführungsbeispiel mit inaktivem Freilauf,
- Fig. 8: den erfindungsgemäßen Türschließer nach dem zweiten Ausführungsbeispiel mit aktiviertem Freilauf,
- Fig. 9: eine Kolbenbaugruppe eines erfindungsgemäßen Türschließers nach einem dritten Ausführungsbeispiel,
- Fig. 10: verschiedene Schnittansichten der Kolbenbaugruppe nach dem dritten Ausführungsbeispiel,
- Fig. 11: ein hydraulisches Schaltsymbol für ein Magnetwegeventil eines erfindungsgemäßen Türschließers nach einem vierten Ausführungsbeispiel,
- Fig. 12: ein hydraulisches Schaltsymbol für ein Magnetwegeventil eines erfindungsgemäßen Türschließers nach einem fünften Ausführungsbeispiel,
- Fig. 13: ein hydraulisches Schaltsymbol für ein Magnetwegeventil eines erfindungsgemäßen Türschließers nach einem sechsten Ausführungsbeispiel,
- Fig. 14: das hydraulische 3/2-Magnetwegeventil des Türschließers nach dem fünften Ausführungsbeispiel in unbestromter Stellung,
- Fig. 15: das hydraulische 3/2-Magentwegeventil des Türschließers gemäß dem fünften Ausführungsbeispiel in bestromter Stellung,
- Fig. 16: einen Ausschnitt aus Fig. 15,
- Fig. 17: das hydraulische 3/2-Magnetwegeventil des Türschließers gemäß dem sechsten Ausführungsbeispiel in unbestromter Stellung,
- Fig. 18: einen Ausschnitt aus Fig. 17, und
- Fig. 19: einen erfindungsgemäßen Türschließers nach einem siebten Ausführungsbeispiel.

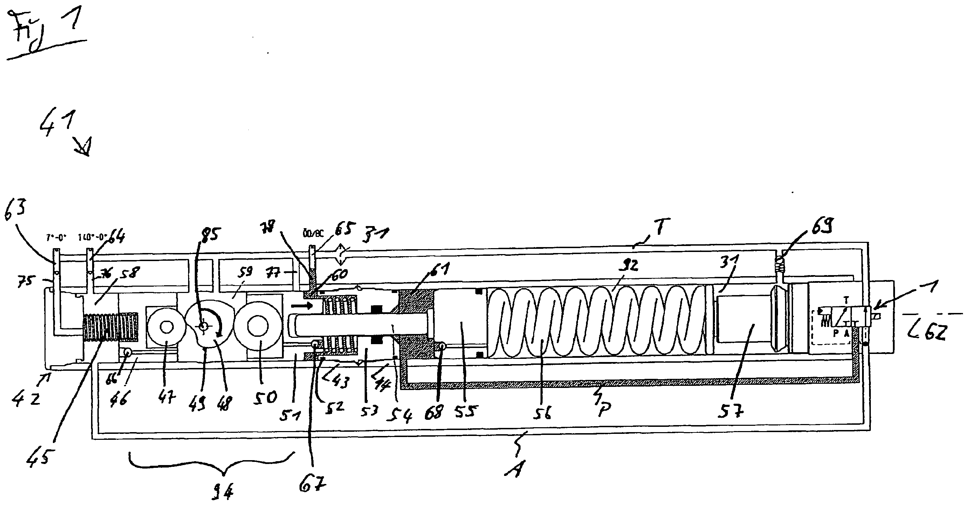

Im Folgenden wird anhand von Fig. 1 der grundlegende Aufbau sowie die Hydrauliksteuerung und die Funktionsweise eines Türschließers 41 gemäß dem ersten Ausführungsbeispiel erläutert.

Der Türschließer 41 erstreckt sich entlang einer Türschließerlängsachse 62. Der Türschließer 41 umfasst ein Türschließergehäuse 42, das sich wiederum aus einem ersten Türschließergehäuseteil 43 und einem zweiten Türschließergehäuseteil 44 zusammensetzt. In Fig. 1 sind die diversen hydraulischen Leitungen außerhalb des Türschließergehäuses 42 dargestellt. Dies dient jedoch nur der Übersichtlichkeit. In der tatsächlichen Ausführung sind die Hydraulikleitungen in das Türschließergehäuse 42 integriert. Im Folgenden wird der Aufbau des Türschließers 41 entlang seiner Türschließerlängsachse 62 von links nach rechts vorgestellt. Eine erste Druckfeder 45 stützt sich gegen das Türschließergehäuse 42, insbesondere gegen eine Stirnseite des ersten Türschließergehäuseteils 43. Die erste Druckfeder 45 belastet eine Kolbenbaugruppe 94 auf Druck. Diese Kolbenbaugruppe 94 ist im Türschließergehäuse 42, insbesondere im ersten Türschließergehäuseteil 43, geführt. Gegenüberliegend der ersten Druckfeder 45 greift eine zweite Druckfeder 52 an der Kolbenbaugruppe 94 an. Diese zweite Druckfeder 52 stützt sich gegen eine Trennwand 53, insbesondere Gehäusetrennwand. Die Trennwand 53 befindet sich an der Schnittstelle zwischen dem ersten Türschließergehäuseteil 43 und dem zweiten Türschließergehäuseteil 44. Die Trennwand 53 stellt einen Flansch zur Verbindung der beiden Gehäuseteile 43, 44 dar und dichtet gleichzeitig die beiden Gehäuseteile 43, 44 voneinander ab. Durch die Trennwand 53 hindurch erstreckt sich eine Kolbenstange 54 entlang der Türschließerlängsachse 62. Die Kolbenstange 54 ist dicht, insbesondere mittels einer Gleitringdichtung, in der Trennwand 53 geführt. Die Kolbenstange 54 ist fest mit einem Schließerfederspannkolben 55 verbunden. Dieser Schließerfederspannkolben 55 ist im Türschließergehäuse 42, insbesondere im zweiten Türschließergehäuseteil 44, geführt. An den Schließerfederspannkolben 55 schließt sich eine Schließerfeder 56 an. Die Schließerfeder 56 stützt sich auf der einen Seite gegen den Schließerfederspannkolben 55 und auf der anderen Seite gegen eine Einstelleinheit 57 für die Schließerfedervorspannung. Im Anschluss an die Einstelleinheit 57 für die Schließerfedervorspannung befindet sich ein 3/2-Magnet-wegeventil 1, ausgebildet als Cartridgeventil, integriert im Türschließergehäuse 42, insbesondere im zweiten Türschließergehäuseteil 44.

Die Kolbenbaugruppe 94 umfasst auf ihrer der ersten Druckfeder 45 zugewandten Seite einen Dämpfungskolben 46 und auf ihrer der Kolbenstange 54 zugewandten Seite einen Öffnungskolben 51. Der Dämpfungskolben 46 umfasst eine in ihm drehbar gelagerte erste Kurvenrolle 47. Der Öffnungskolben 51 umfasst eine in ihm drehbar gelagerte zweite Kurvenrolle 50. Zwischen der ersten Kurvenrolle 47 und der zweiten Kurvenrolle 50 ist eine Abtriebswelle 48, ausgebildet als Nockenwelle, angeordnet. Die Abtriebswelle 48 erstreckt sich entlang einer Abtriebsachse 85 senkrecht zur Türschließerlängsachse 62. Diese Abtriebswelle 48 überträgt die Kraft aus der Kolbenbaugruppe 94 über ein Hebelgestänge bzw. Gleitschienengestänge zur Tür sowie von der Tür auf die Kolbenbaugruppe 94. Hierzu umfasst die Abtriebswelle 48 eine nockenförmig ausgebildete Abwälzkontur 49. Die erste Kurvenrolle 47 und die zweite Kurvenrolle 50 wälzen auf dieser Abwälzkontur 49 ab. Die Abwälzkontur 49 ist herzförmig ausgestaltet.

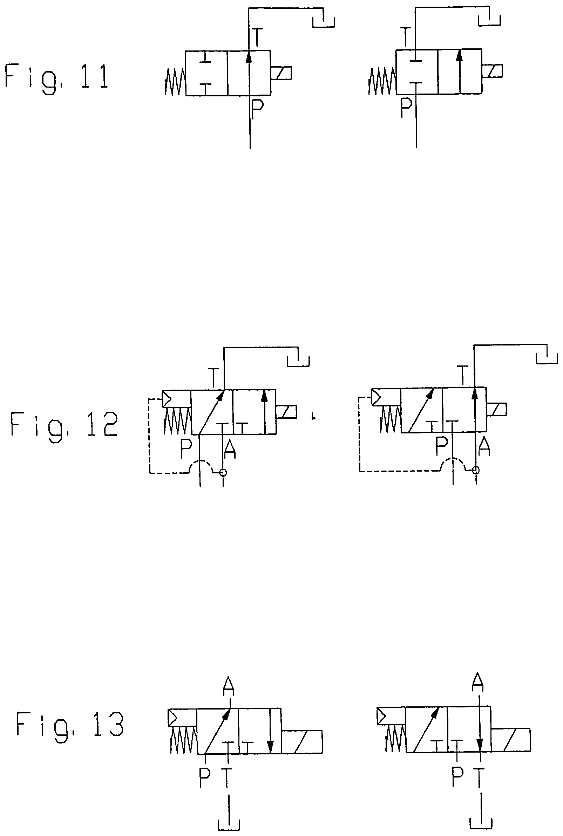

Der Dämpfungskolben 46, der Öffnungskolben 51 und der Schließerfederspannkolben 55 sind dicht innerhalb des Türschließergehäuses 42 geführt und umfassen hierzu bevorzugt an ihrem Umfang Dichtungen oder Dichtflansche. Durch diese dichte Führung der Kolben entstehen im Türschließergehäuse 42 verschiedene Räume bzw. Kammern, die über diverse hydraulische Leitungen miteinander verbunden sind. Diese Kammern bzw. Räume werden wiederum gemäß dem in Fig. 1 gezeigten Aufbau von links nach rechts entlang der Türschließerlängsachse 62 vorgestellt: Definiert durch das linke Stirnende des Türschließergehäuses 42, insbesondere des ersten Türschließergehäuseteils 43, und den Dämpfungskolben 46, ist ein Schließdämpfungsraum 58 ausgebildet. Zwischen dem Dämpfungskolben 46 und dem Öffnungskolben 51 befindet sich ein Kolbenbaugruppeninnenraum 59. Dieser kann auch als Nockenwellenraum bezeichnet werden. Der Kolbenbaugruppeninnenraum 59 ist beidseitig durch den Dämpfungskolben 46 und den Öffnungskolben 51 abgedichtet und befindet sich stets auf Tankdruckniveau. Zwischen dem Öffnungskolben 51 und der Trennwand 53 befindet sich ein Öffnungsdämpfungsraum 60. Auf der anderen Seite der Trennwand 53 befindet sich zwischen der Trennwand 53 und dem Schließerfederspannkolben 55 der Sperrraum 61. Der Sperrraum 61 ist definiert durch die Trennwand 53, die Wandung des zweiten Türschließergehäuseteils 44 und den Schließerfederspannkolben 55. Des Weiteren umfasst der Türschließer 41 einen Tankraum 31. Der Tankraum 31 liegt zwischen dem Schließfederspannkolben 55 und dem Magnetwegeventil 1 und nimmt die Schließerfeder 56 und die Einstelleinheit 57 auf. Anhand der Fig. 11 bis 18 wird später eine genaue Ausbildung des Magnetwegeventils 1 dargestellt. Hierbei wird auch die spezielle konstruktive Ausführung eines bevorzugten Tankraums 31 beschrieben. Insbesondere kann auch ein Schließerfederaufnahmeraum 92 und/oder der Kolbenbaugruppeninnenraum 59 mittels ungedrosselter Verbindungen zum Tankraum 31 als Tank mitgenutzt werden.

Der Türschließer 41 umfasst des Weiteren eine erste hydraulische Leitung, ausgebildet als Druckleitung P, eine zweite hydraulische Leitung, ausgebildet als Arbeitsleitung A, und eine dritte hydraulische Leitung, ausgebildet als Tankleitung T. Die drei hydraulischen Leitungen verlaufen parallel zur Türschließerlängsachse 62 im Türschließergehäuse 42. Über kurze, radial bzw. senkrecht zur Türschließerlängsachse 62 verlaufende Kanäle sind die drei hydraulischen Leitungen mit den verschiedenen Kammern bzw. Räumen im Türschließer 41 verbunden. Fig. 1 zeigt die hydraulischen Leitungen nur schematisch. Tatsächlich sind die hydraulischen Leitungen in das Türschließergehäuse 42 integriert. Die Druckleitung P führt vom Sperrraum 61 direkt und ungedrosselt zum Magnetwegeventil 1. Die Arbeitsleitung A führt vom Schließdämpfungsraum 58 direkt und ungedrosselt zum Magnetwegeventil 1. Das Magnetwegeventil 1 ist ferner mit der Tankleitung T verbunden. Die Beschreibung als direkt und ungedrosselt bedeutet, dass keine separaten Drosseln in den Leitungen vorgesehen sind. Nichtsdestotrotz kann der Druck jedoch über etwaige Filter sowie dynamische Druckunterschiede leicht gedrosselt sein.

Der Öffnungsdämpfungsraum 60 ist über eine erste gedrosselte Verbindung 78 mit der Tankleitung T verbunden. Hierzu ist ein erstes Drosselventil 65 eingesetzt. Darüber hinaus besteht zwischen dem Öffnungsdämpfungsraum 60 und der Tankleitung T eine erste ungedrosselte Verbindung 77. Die Öffnung des Öffnungsdämpfungsraums 60 in die erste ungedrosselte Verbindung 77 befindet sich näher an der Abtriebswelle 48 als die Öffnung des Öffnungsdämpfungsraums 60 in die erste gedrosselte Verbindung 78. Dadurch kann nach einem bestimmten Öffnungswinkel der Tür die ungedrosselte Verbindung 77 durch den Öffnungskolben 51 verschlossen werden.

Der Schließdämpfungsraum 58 ist über eine zweite gedrosselte Verbindung 75, die an der Stirnseite des ersten Türschließergehäuseteils 43 ansetzt, mit der Tankleitung T verbunden. Hierzu ist ein zweites Drosselventil 63 eingesetzt. Des Weiteren befindet sich in der Mantelfläche des Türschließergehäuses 42 eine dritte gedrosselte Verbindung 76 zwischen dem Schließdämpfungsraum 58 und der Tankleitung T mit einem dritten Drosselventil 64. Der Kolbenbaugruppeninnenraum 59 ist über zumindest einen radialen Kanal mit der Tankleitung T ungedrosselt verbunden. In der Tankleitung T ist ein Filter 31 eingezeichnet. Die Position des Filters 31 ist hier rein beispielhaft. So kann beispielsweise der Filter 31 auch im Magnetventil 1 integriert sein. Es können sich auch bevorzugt weitere Filter 31 in den anderen hydraulischen Leitungen befinden.

Im Dämpfungskolben 46 ist ein erstes Rückschlagventil 66 eingebaut. Dieses sperrt in Richtung des Kolbenbaugruppeninnenraums 59. Im Schließerkolben 51 ist ein zweites Rückschlagventil 67 eingebaut. Dieses sperrt ebenfalls in Richtung des Kolbenbaugruppeninnenraums 59. Im Schließerfederspannkolben 55 ist ein drittes Rückschlagventil 68 vorgesehen. Dieses ermöglicht Hydraulikfluss in Richtung des Sperrraumes 61 und eine Sperrung in Richtung Tankraum 31. Zwischen dem Tankraum 31 und der Tankleitung T ist ein viertes Rückschlagventil 69 vorgesehen. Dieses Rückschlagventil ist federbelastet und sperrt in Richtung der Tankleitung T. Durch das erste, zweite und dritte Rückschlagventil 66, 67 und 68 können sich der Schließdämpfungsraum 58, der Öffnungsdämpfungsraum 60 und der Sperrraum 61 bei Expansion stets mit Hydrauliköl aus dem Tankvolumen füllen.

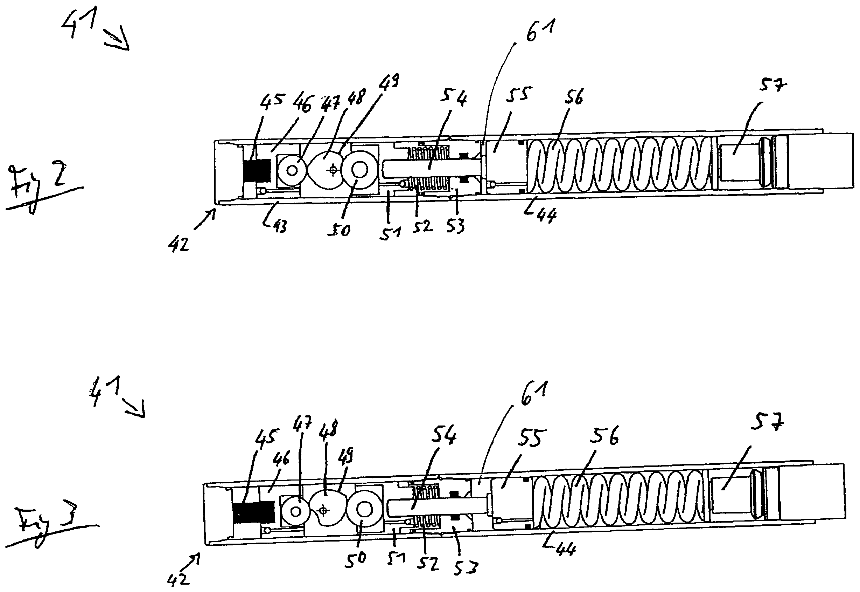

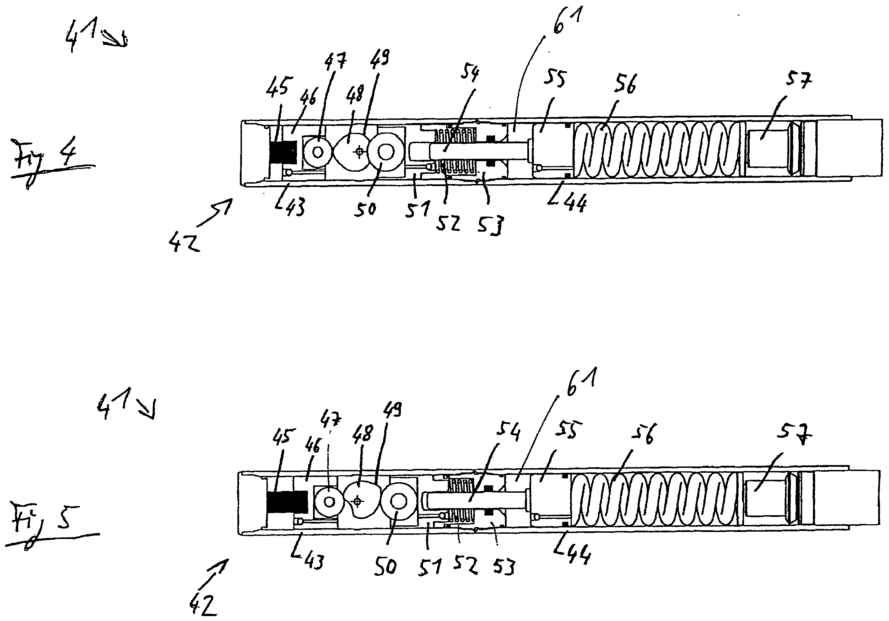

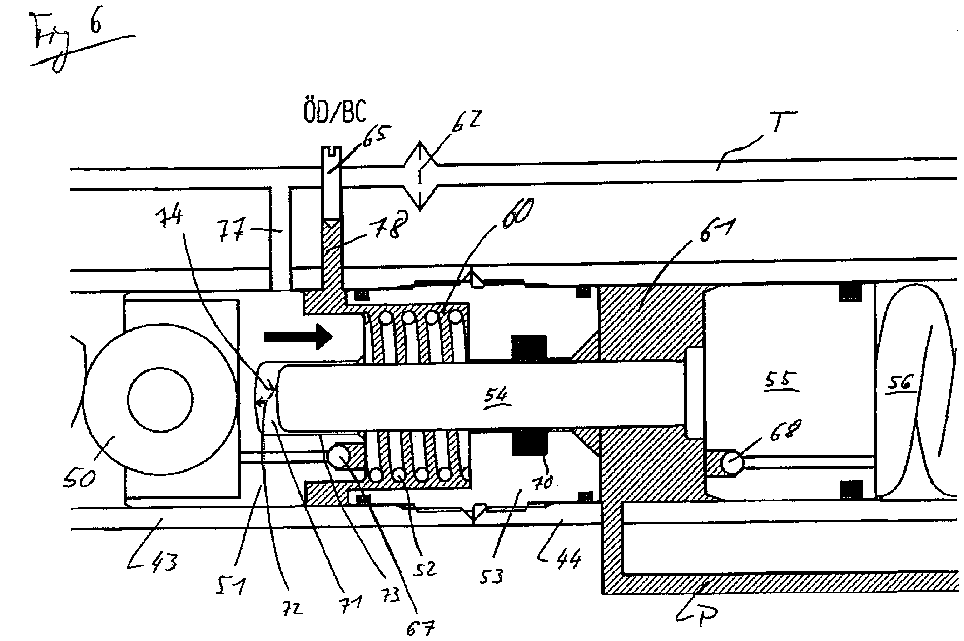

Zwischen der Kolbenstange 54 und dem Öffnungskolben 51 ist eine Freilaufanordnung ausgebildet. Die konstruktive Ausgestaltung dieser Freilaufanordnung wird in Fig. 6 genauer erläutert. Zunächst wird jedoch anhand der Fig. 2 bis 5 der Funktions- und Bewegungsablauf des Türschließers 41 genauer erläutert. Der Funktions- und Bewegungsablauf des Türschließers 41 gemäß den Fig. 2 bis 5 gilt für alle hier vorgestellten Ausführungsbeispiele. Fig. 2 zeigt den Türschließer 41 bei 0° Winkelstellung mit entspannter Schließerfeder. Fig. 2 zeigt somit die Ausgangsstellung des Türschließers 41. Fig. 3 zeigt den Türschließer während des Öffnungsvorgangs bei einer Winkelstellung von 150° der Abtriebswelle 48. Die Tür wird hierbei durch eine Person geöffnet. Dadurch rotiert die über ein Gestänge mit dem Türrahmen verbundene Abtriebswelle 48. Über die Abwälzkontur 49 überträgt sich die Kraft auf die Kurvenrollen 47, 50. Dies bewirkt eine translatorische Bewegung der Kolbenbaugruppe 94 nach rechts. Mit der Kolbenbaugruppe 94 wird auch die Kolbenstange 54 und somit der Schließerfederspannkolben 55 nach rechts bewegt. Dadurch spannt sich die Schließerfeder 56 vor. Während dieses Öffnungsvorganges ist die Druckleitung P mittels des Magnetwegeventils 1 verschlossen. Über das dritte Rückschlagventil 68 wird Hydraulikflüssigkeit in den Sperrraum 61 gedrückt. Der in Fig. 3 dargestellte Öffnungsvorgang dient zum Spannen der Schließerfeder 56. Nach dem Spannen der Schließerfeder 56 und unter Beibehaltung der verschlossenen Druckleitung P ist die Freilauffunktion des Türschließers 41 aktiv. Fig. 4 zeigt den Türschließer 41 wieder in geschlossener Stellung bei einem Türwinkel von 0°. Wie hier gut zu sehen ist, verbleibt die Schließerfeder 56 in der gespannten Stellung, da der Sperrraum 61 mit Hydrauliköl gefüllt bleibt. Zusammen mit dem Schließerfederspannkolben 55 bleibt auch die Kolbenstange 54 unbeweglich. Die Kolbenbaugruppe 94 hebt dank der Freilaufanordnung bei einer manuell an der Tür getätigten Schließbewegung über die Rückdrehung der Antriebswelle 42 von der Kolbenstange 54 ab. Die Kolbenbaugruppe 94 ist hier zusammen mit der Tür frei beweglich. Lediglich über die beiden Druckfedern 45, 52 wird eine leichte Kraft auf die Kolbenbaugruppe 94 übertragen, damit über die Kurvenrollen 47 und 50 ein stetiger und spielfreier Kontakt der Kolbenbaugruppe 94 mit der Antriebswelle 48 bzw. der Nockenkontur 49 gewährleistet wird. Wie Fig. 5 zeigt, verbleibt während der Freilauffunktion die Schließerfeder 56 in ihrer gespannten und arretierten Position. Die Tür ist währenddessen ohne Drehmoment frei beweglich.

Fig. 6 zeigt eine Detailansicht des Freilaufs gemäß dem ersten Ausführungsbeispiel. Die Freilaufanordnung ist hier als Verschiebekupplung ausgeführt. Die beiden wesentlichen Bestandteile dieser Freilaufanordnung sind die erste Stirnfläche 74 und die zweite Stirnfläche 72. Die erste Stirnfläche 74 ist parallel zur zweiten Stirnfläche 72. Beide Stirnflächen 74, 72 stehen senkrecht zur Türschließerlängsachse 62. Die erste Stirnfläche 74 ist eine Stirnfläche der Kolbenstange 54. Die zweite Stirnfläche 72 befindet sich an der Kolbenbaugruppe 94, insbesondere am Öffnungskolben 71. In der in Fig. 6 dargestellten Ausführung ist in den Öffnungskolben 51 eine Tasche 71 eingearbeitet. In diese Tasche 71 greift ein Teil der Kolbenstange 54 ein und ist darin entlang der Kolbenführung 73 geführt. Die zweite Stirnfläche 72 ist als Boden der Tasche 71 ausgebildet. Die beiden Stirnflächen 74, 72 stehen sich somit in der Tasche 71 gegenüber und können im Falle des Freilaufs voneinander abheben.

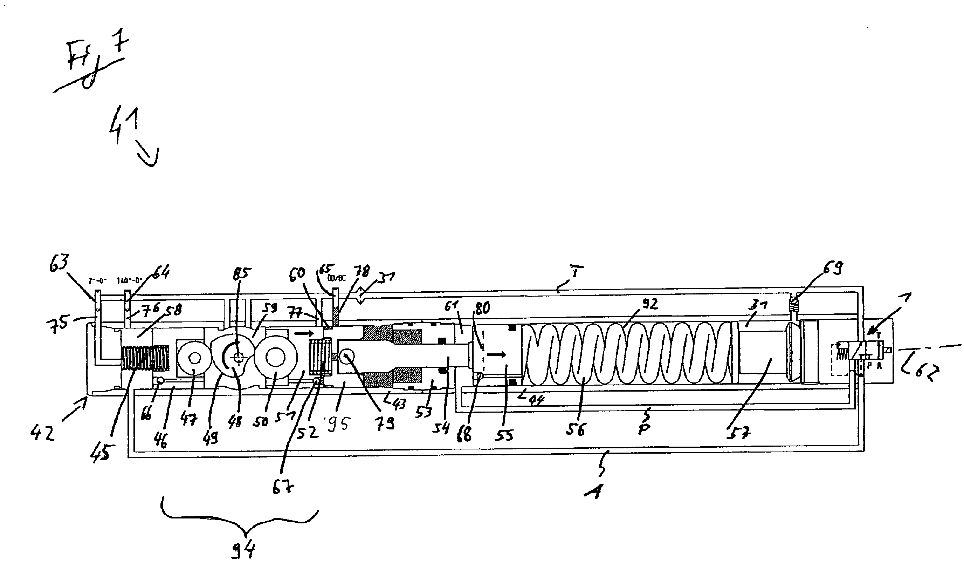

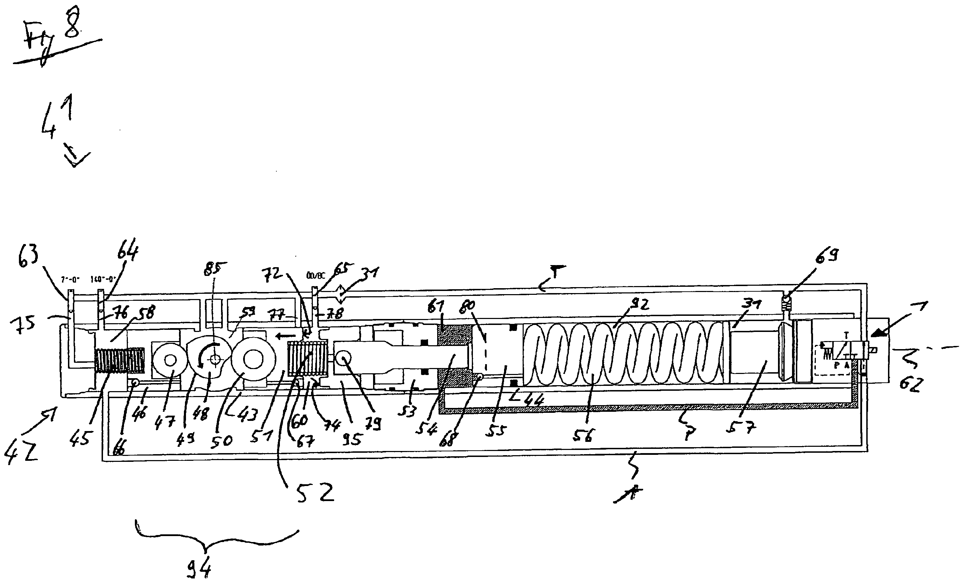

Die Fig. 7 und 8 zeigen einen Türschließer 41 gemäß einem zweiten Ausführungsbeispiel. Gleiche bzw. funktional gleiche Bauteile sind in allen Ausführungsbeispielen mit den gleichen Bezugszeichen versehen. Fig. 7 zeigt einen Türschließer 41 während des Vorspannens der Schließerfeder 56. In Fig. 8 ist der Sperrraum 61 hydraulisch über die Druckleitung P blockiert. Dadurch verbleiben der Schließerfederspannkolben 55 und die Schließerfeder 56 in gespannter Position. Die Kolbenbaugruppe 94 und die Tür sind im Freilauf beweglich.

Das zweite Ausführungsbeispiel entspricht dem ersten Ausführungsbeispiel bis auf die im Folgenden beschriebenen Unterschiede: Im Unterschied zum ersten Ausführungsbeispiel ist im zweiten Ausführungsbeispiel ein Zusatzkolben 95 zwischen der Trennwand 53 und der Kolbenbaugruppe 94, insbesondere dem Öffnungskolben 51, angeordnet. Der Zusatzkolben 95 ist zur Übertragung translatorischer Bewegung fest mit der Kolbenstange 54 verbunden. Die erste Stirnfläche 74 ist stirnseitig am Zusatzkolben 95 ausgebildet. Der Zusatzkolben 95 umfasst einen Durchlass, sodass sowohl der Raum zwischen Zusatzkolben 95 und Kolbenbaugruppe 94 sowie der Raum zwischen Zusatzkolben 95 und Trennwand 53 den Öffnungsdämpfungsraum 60 bilden. Ein weiterer Unterschied zwischen dem ersten und zweiten Ausführungsbeispiel ist, dass im zweiten Ausführungsbeispiel die Kolbenstange 54 schwenkbar mit dem Zusatzkolben 95 und dem Schließerfederspannkolben 55 verbunden ist. Die Verbindung zwischen der Kolbenstange 54 und dem Zusatzkolben 95 ist um eine erste Achse 79 schwenkbar. Die Verbindung zwischen der Kolbenstange 54 und dem Schließerfederspannkolben 55 ist um eine zweite Achse 80 schwenkbar. Die beiden Achsen 79, 80 stehen beide senkrecht zur Türschließerlängsachse 62. Darüber hinaus steht die erste Achse 79 senkrecht zur zweiten Achse 80. Ferner steht die Achse 80 senkrecht zur Türschließerlängsachse 62. Diese schwenkbare Anbindung der Kolbenstange 54 verhindert bei Auftreten von Kräften, die nicht parallel zur Türschließerlängsachse 62 verlaufen, ein Verklemmen der Anordnung.

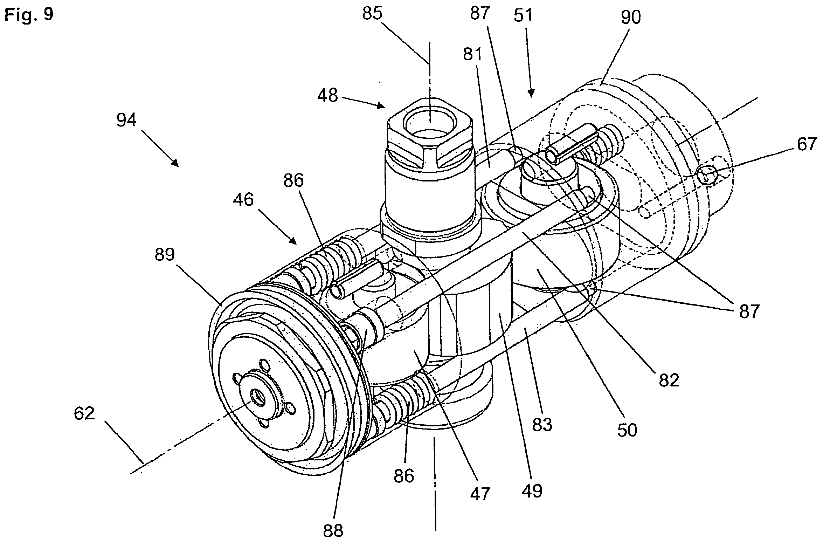

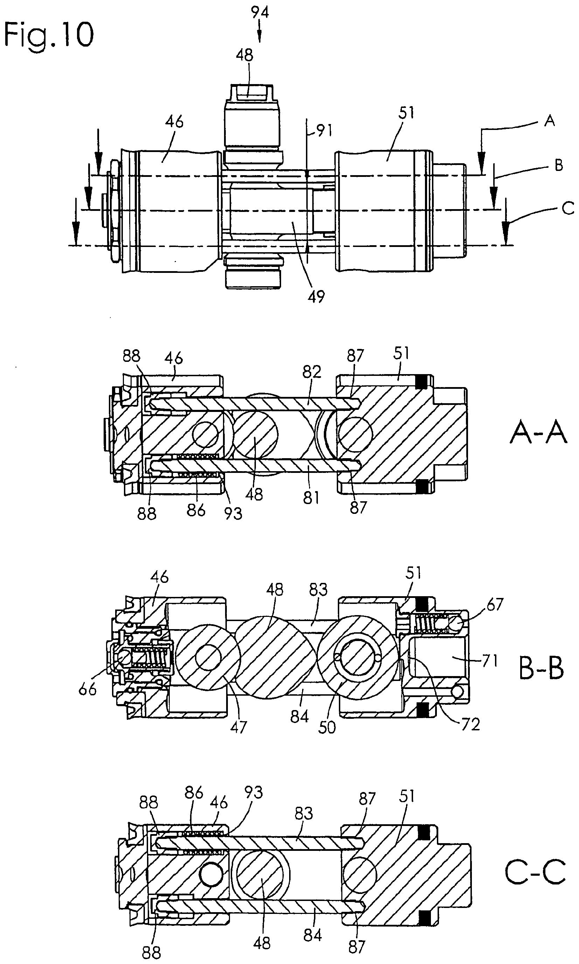

Die Fig. 9 und 10 zeigen eine Kolbenbaugruppe 94 des Türschließers 41 gemäß einem dritten Ausführungsbeispiel. Gleiche bzw. funktional gleiche Bauteile sind in allen Ausführungsbeispielen mit den gleichen Bezugszeichen versehen. Die Kolbenbaugruppe 94 aus dem dritten Ausführungsbeispiel kann bevorzugt in den Türschließern 41 nach allen hier vorgestellten Ausführungsbeispielen angewandt werden.

Die in den Fig. 9 und 10 vorgestellte Kolbenbaugruppe 94 ersetzt die Kolbenbaugruppe 94 aus den Fig. 1 bis 7, dabei insbesondere den Dämpfungskolben 46 mit der ersten Kurvenscheibe 47 und den Öffnungskolben 51 mit der zweiten Kurvenscheibe 50. Die Abtriebswelle 48 bleibt unverändert. Durch die Verwendung der Kolbenbaugruppe 94 gemäß dem dritten Ausführungsbeispiel sind die erste Druckfeder 45 und die zweite Druckfeder 52 nicht mehr nötig, können jedoch trotzdem zusätzlich verwendet werden.

Fig. 9 zeigt die Kolbenbaugruppe 94, wobei der Dämpfungskolben 46 und der Öffnungskolben 51 mittels einer ersten Zugstange 81, einer zweiten Zugstange 82, einer dritten Zugstange 83 und einer vierten Zugstange 84 miteinander verbunden sind. Die vier Zugstangen 81-84 sind parallel zur Türschließerlängsachse 62 angeordnet. Darüber hinaus befinden sich die vier Zugstangen 81-84 an vier Ecken eines rein zu Erklärungszwecken vorzustellenden Quadrates oder Rechtecks. Die Abtriebsachse 85 der Abtriebswelle 48 verläuft durch den Schnittpunkt der Diagonalen dieses Quadrates oder Rechtecks. Durch diese spezielle Anordnung der vier Zugstangen 81-84 kann die volle Höhe 91 (siehe Fig. 10) der Abwälzkontur 49 zwischen den beiden oben angeordneten Zugstangen 81, 82 und den beiden unten angeordneten Zugstangen 83, 84 angeordnet werden. Die Höhe 91 der Abwälzkontur 49 definiert sich dabei in Richtung der Abtriebsachse 85. Die Abwälzkontur 49 bedarf keiner Aussparungen für die Zugstangen 81-84 und kann somit optimal belastet werden.

Die vier Zugstangen 81-84 sind jeweils über Verschraubungen 87 fest mit dem Öffnungskolben 51 verbunden. An ihrem anderen Ende ragen die vier Zugstangen 81-84 jeweils in Durchgangsbohrungen des Dämpfungskolbens 46. Hier sind die Enden der Zugstangen 81-84 jeweils mit einer Federspannmutter 88 verschraubt. Die erste Zugstange 81 und die zur ersten Zugstange 81 diagonal angeordnete dritte Zugstange 83 sind jeweils mit einer integrierten Spielausgleichsfeder 86 auf Zug belastet. Die integrierten Spielausgleichsfedern 86 stecken auf der ersten Zugstange 81 bzw. dritten Zugstange 83 und befinden sich im Dämpfungskolben 46. Ein erstes, der Abtriebswelle 48 abgewandtes Ende der Spielausgleichsfedern 86 stützt sich gegen die Federspannmutter 88, welche mit der entsprechenden Zugstange 81, 83 verschraubt ist. Ein zweites, der Abtriebswelle 48 zugewandtes Ende der jeweiligen Spielausgleichsfeder 86 stützt sich gegen einen Absatz 93 (siehe Fig. 10), ausgebildet im Dämpfungskolben 46. Durch diese spezielle Anordnung können die Spielausgleichsfedern 86, welche als Druckfedern ausgebildet sind, die erste und dritte Zugstange 81, 83 auf Zug belasten.

Darüber hinaus zeigt Fig. 9 einen ersten Abdichtungsflansch 89 am Dämpfungskolben 46, welcher den Dämpfungskolben 46 gegenüber dem Türschließergehäuse 42 , insbesondere gegenüber dem Schließdämpfungsraum 58, abdichtet. In ähnlicher Weise ist der Öffnungskolben 51 mittels eines zweiten Abdichtungsflansches 90 gegenüber dem Türschließergehäuse 42 abgedichtet. Der zweite Abdichtungsflansch 90 ist als Stützschulter für eine Kolbendichtung ausgebildet. Der Öffnungskolben 51 ist einteilig mit dem zweiten Abdichtungsflansch 90 ausgeführt. Diese beiden Abdichtungsflansche 89, 90 finden in den Kolbenbaugruppen 94 aller Ausführungsbeispiele Anwendung.

Fig. 10 zeigt drei Schnittansichten der Kolbenbaugruppe 94 gemäß dem dritten Ausführungsbeispiel. Im Schnitt B-B ist zu erkennen, dass hier wiederum die Tasche 71 im Öffnungskolben 51 ausgebildet ist. Am Boden dieser Tasche befindet sich die zweite Stirnfläche 72. In diese Tasche 71 greift die Kolbenstange 54 ein, sodass die Freilauffunktion gewährleistet ist.

Die bisher vorgestellten Ausführungsbeispiele zeigen zwei grundlegende Möglichkeiten zum Spielausgleich zwischen den Kurvenrollen 47, 50 und der Abwälzkontur 49. In den ersten beiden Ausführungsbeispielen wird der Dämpfungskolben 46 durch die erste Druckfeder 45 leicht in Richtung der Abtriebswelle 48 druckbelastet. Der Öffnungskolben 51 wird mit der zweiten Druckfeder 52 leicht in Richtung der Abtriebswelle 48 druckbelastet. Dies gewährleistet einen steten Kontakt zwischen Kurvenrollen 47, 50 und der Abwälzkontur 49. Eine Alternative hierzu zeigt das dritte Ausführungsbeispiel. Hier ist der Spielausgleich in die Kolbenbaugruppe 94 integriert. Durch die Zugstangen 81-84 und die integrierten Spielausgleichsfedern 89 werden der Dämpfungskolben 46 und der Öffnungskolben 51 stets leicht zusammengezogen, sodass die beiden Kurvenrollen 47, 50 stets an der Abwälzkontur 49 anliegen. Besonders vorteilhaft ist hier, dass keinerlei Moment auf die Abtriebswelle 48 wirkt und somit im Freilauf die Tür in jeder beliebigen Position stehen bleibt. Die symmetrische und diagonale Anordnung der vier Zugstangen 81-84 dient zur absolut gleichmäßigen Kraftübertragung und verhindert somit jegliches Verkanten. Deshalb sind auch die beiden verwendeten Spielausgleichsfedern 46 an zwei zueinander diagonalen Zugstangen 81, 83 angeordnet. Alternativ hierzu könnte auch an jeder der Zugstangen 81-84 eine Spielausgleichsfeder 86 vorgesehen sein. Selbstverständlich können die Spielausgleichsfedern 86 bevorzugt alle oder teilweise auch im Öffnungskolben 51 angeordnet werden. Darüber hinaus verhindern die Zugstangen 81-84 ein Verdrehen von Dämpfungskolben 46 und Öffnungskolben 51 zueinander.

Ferner kann die Kolbenbaugruppe 94 gemäß dem dritten Ausführungsbeispiel auch zusammen mit der ersten Druckfeder 45 und/oder der zweiten Druckfeder 52 bevorzugt angewendet werden. Ein besonderer Anwendungsfall ergibt sich beispielsweise bei sehr schweren Brandschutztüren. Die für den Brandfall benötigte Schließkraft bedingt sehr starke Schließerfedern 56. So ist es für das alltägliche Begehen der Türe wünschenswert, dass die Schließerfeder 56 stets vorgespannt bleibt und beispielsweise im Brandfall die Türe schließt. Nichtsdestotrotz besteht der Bedarf nach einer leichtgängigen und selbständig schließenden Türe, wobei dieses leichte Schließen nach jeder Begehung erfolgen sollte. Deshalb ist es bevorzugt, dass man in jedem den hier vorgestellten Türschließer 41 die zweite Druckfeder 52 als "zusätzliche Schließerfeder", ausgelegt z.B. nach EN1 oder EN2, ausführt, wobei diese zusätzliche Schließerfeder bzw. zweite Druckfeder 52 sehr viel schwächer ist als die Schließerfeder 56. Die zweite Druckfeder 52 in dieser Ausführungsvariante belastet somit selbst im Freilauf und bei blockierter Schließerfeder 56 die Kolbenbaugruppe 94, insbesondere den Öffnungskolben 51, stets in Schließrichtung, sodass die Tür selbst bei Freilauf, zumindest bei nicht so großem Widerstand, selbsttätig schließt. Der Begeher muss aber trotz allem nicht bei jedem Öffnungsvorgang die große Schließerfeder 56, sondern nur die sehr leicht ausgeführte zweite Druckfeder 52 spannen. Insbesondere bei dieser Ausführungsvariante kann bevorzugt die Kolbenbaugruppe 94 gemäß den Fig. 9 und 10 nach dem dritten Ausführungsbeispiel mit der zweiten Druckfeder 52 kombiniert werden.

Die Fig. 11, 12, und 13 zeigen ein viertes, fünftes und sechstes Ausführungsbeispiel für einen Türschließer 41, wobei hier jeweils das Schaltsymbol für das Magnetwegeventil 1 dargestellt ist. Fig. 12 mit dem fünften Ausgangsbeispiel zeigt hier die bevorzugte Ausführungsvariante.

Das vierte Ausführungsbeispiel nach Fig. 11 zeigt eine sehr einfache Ausführung, wobei in einem solchen Türschließer 41 die Arbeitsleitung A zum Schließdämpfungsraum 58 eingespart wird. Das Magnetwegeventil 1 steuert hier lediglich eine Verbindung der Druckleitung P aus dem Sperrraum 61 zur Tankleitung T. Die Druckleitung P kann alternativ offen oder geschlossen sein, sodass der Freilauf wahlweise deaktiviert oder aktiviert ist.

Fig. 12 zeigt das Schaltsymbol für das fünfte Ausführungsbeispiel. Hier ist in einem links dargestellten unbestromten Zustand des Magnetwegeventils 1 die Druckleitung P mit der Tankleitung T verbunden. Die Arbeitsleitung A ist gesperrt. Die rechts dargestellte Schaltstellung zeigt den bestromten Zustand des Magnetwegeventils 1. Hier sind die Druckleitung P und somit der Sperrraum 61 und infolgedessen auch die Schließerfeder 56 gesperrt. Der Schließdämpfungsraum 58 ist über die Arbeitsleitung A mit dem Tank kurzgeschlossen.

Fig. 13 zeigt das Schaltsymbol für das sechste Ausführungsbeispiel. Gemäß der linken Darstellung ist im unbestromten Zustand die Druckleitung P mit der Arbeitsleitung A verbunden. Im bestromten Zustand gemäß der rechten Darstellung sind die Druckleitung P und somit der Sperrraum 61 blockiert. Die Arbeitsleitung A und infolgedessen der Schließdämpfungsraum 58 ist mit der Tankleitung T kurzgeschlossen.

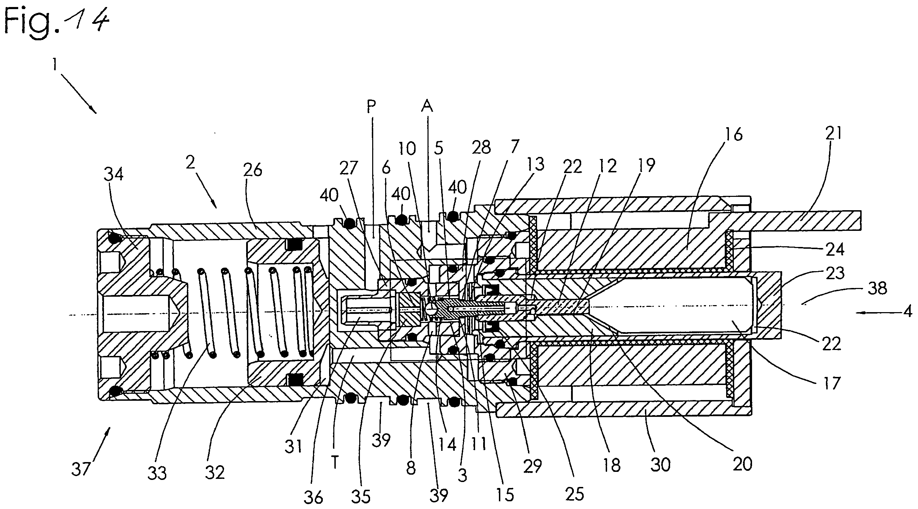

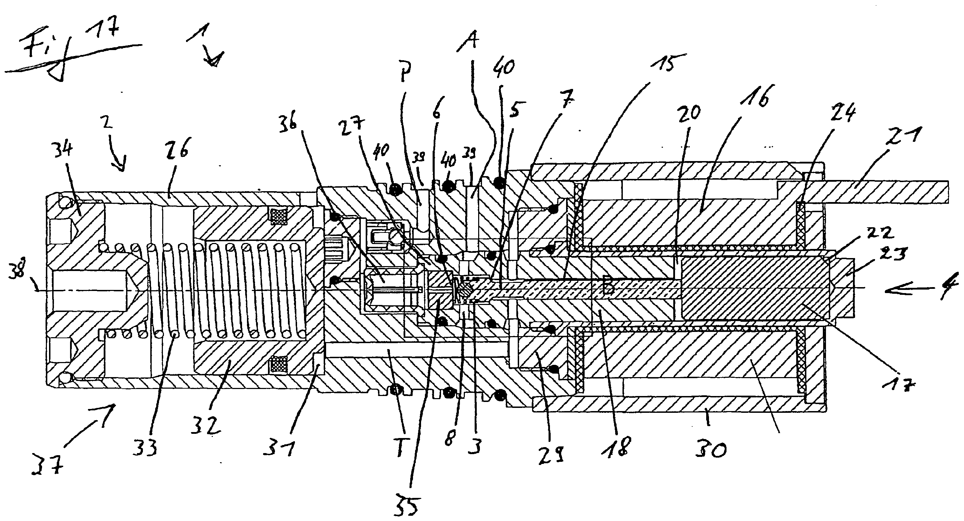

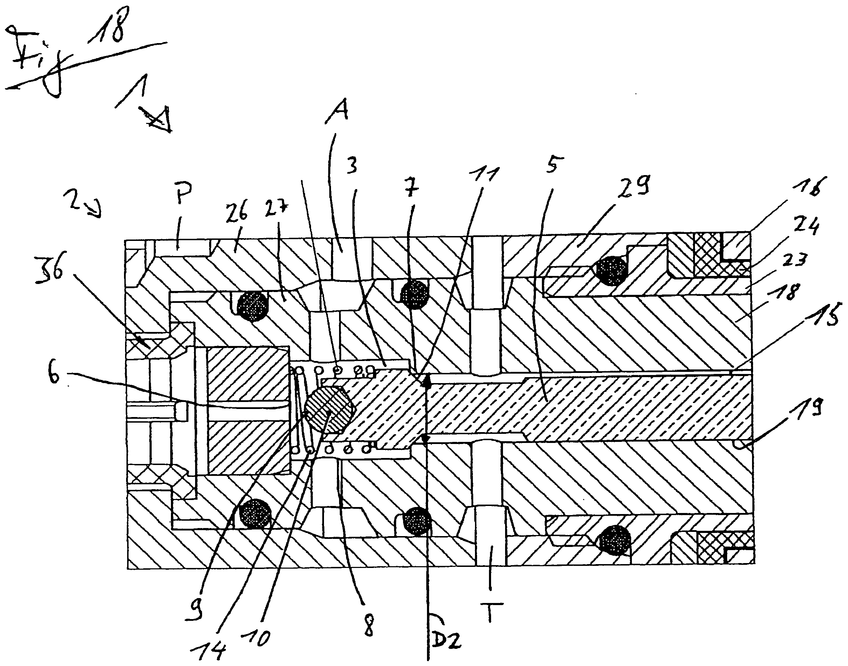

Die Fig. 14 bis 16 zeigen nun die konstruktive Ausgestaltung des Magnetwegeventils 1 gemäß dem Türschließer 41 nach dem fünften Ausgangsbeispiel. Daraufhin wird anhand der Fig. 17 und 18 eine konstruktive Ausgestaltung des Magnetwegeventils 1 für einen Türschließer 41 gemäß dem sechsten Ausführungsbeispiel vorgestellt.

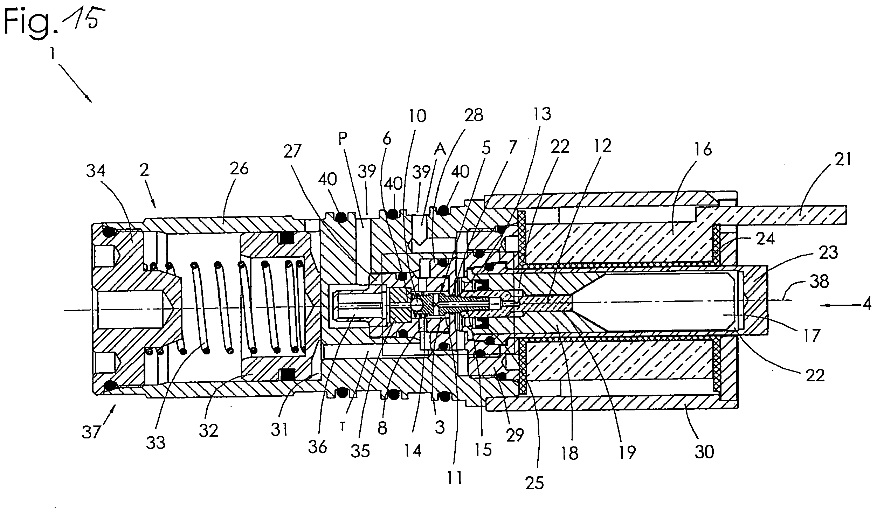

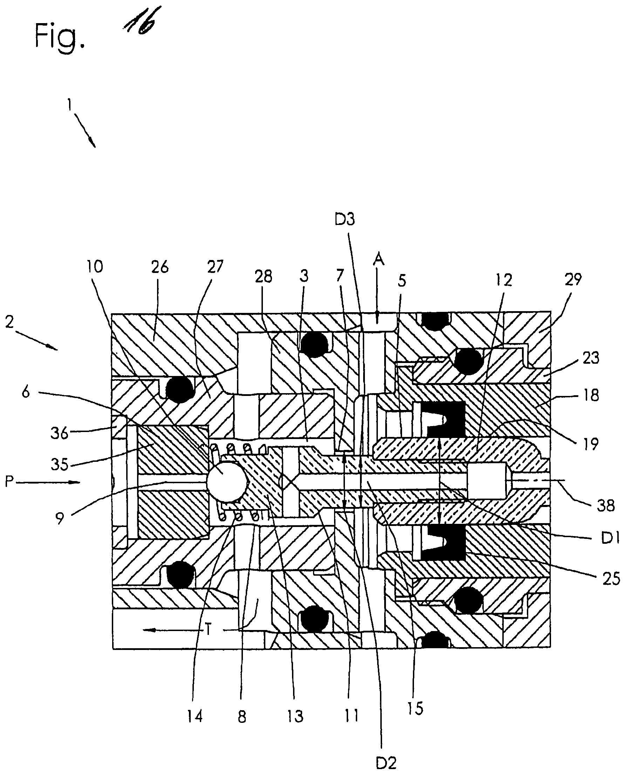

Anhand der Fig. 14 wird die Schaltstellung gemäß Fig. 12 auf der linken Seite gezeigt. Die Fig. 15 und 16 zeigen die Schaltstellung gemäß dem rechts dargestellten Symbol in Fig. 12.

Fig. 14 zeigt einen Schnitt durch das hydraulische 3/2-Magnetwegeventil im unbestromten Zustand. Das hydraulische 3/2-Magnetwegeventil 1 umfasst ein Ventilgehäuse 2, eine in das Ventilgehäuse 2 integrierte Ventilkammer 3, einen Elektromagneten 4 und einen Ventilstößel 5. Der Ventilstößel 5 bewegt sich in Längsrichtung entlang einer Ventilachse 38.

Die Ventilkammer 3 umfasst eine erste Ventilsitzbohrung 6 als Verbindung der Druckleitung P zur Ventilkammer 3 und eine zweite Ventilsitzbohrung 7 als Verbindung der Arbeitsleitung A zur Ventilkammer 3. Ferner ist an der Ventilkammer 3 eine freie Öffnung 8 zur Tankleitung T ausgebildet. Die erste Ventilsitzbohrung 6 liegt der zweiten Ventilsitzbohrung 7 direkt gegenüber. Die freie Öffnung 8 ist ebenfalls als Bohrung ausgeführt, wobei die Bohrung der freien Öffnung 8 senkrecht zur ersten Ventilsitzbohrung 6 und zur zweiten Ventilsitzbohrung 7 steht. Darüber hinaus ist ein Durchmesser der ersten Ventilsitzbohrung 6 wesentlich kleiner ausgeführt als ein Durchmesser der zweiten Ventilsitzbohrung 7.

Der Ventilstößel 5 ist zweiteilig aufgebaut und umfasst einen ersten Teil 12 und einen in den ersten Teil 12 eingeschraubten und somit mit dem ersten Teil 12 fest verbundenen zweiten Teil 13. Der zweite Teil 13 erstreckt sich vom Inneren der Ventilkammer 3 durch die zweite Ventilsitzbohrung 7 hindurch in Richtung des Elektromagneten 4. Der erste Teil 12 liegt komplett außerhalb der Ventilkammer 3.

Der zweite Teil 13 des Ventilstößels 5 umfasst auf seiner der ersten Ventilsitzbohrung 6 zugewandten Seite eine erste Dichtfläche, ausgebildet als konvexe Oberfläche 9 (siehe insbesondere Fig. 16). Diese konvexe Oberfläche 9 wird gebildet durch eine Kugel 10. Die Kugel 10 wiederum ist in einer stirnseitigen Ausnehmung des Ventilstößels 5, insbesondere des zweiten Teils 13, eingebettet. Des Weiteren ist am Ventilstößel 5, insbesondere am zweiten Teil 13, ein Absatz ausgebildet. Auf diesem Absatz stützt sich eine Ventildruckfeder 14 ab. Die konvexe Oberfläche 9 befindet sich innerhalb dieser Ventildruckfeder 14. Die Ventildruckfeder 14 stützt sich des Weiteren an der Stirnfläche der ersten Ventilsitzbohrung 6 ab. Diese Stirnfläche kann auch als Dichtfläche oder Seitenfläche der ersten Ventilsitzbohrung 6 bezeichnet werden. Durch diese Anordnung der Ventildruckfeder 14 ist der Ventilstößel 5 in Richtung des Elektromagneten 4 belastet. Im unbestromten Zustand führt dies zu einer Öffnung der ersten Ventilsitzbohrung 6.

An der zweiten Ventilsitzbohrung 7 umfasst der Ventilstößel 5, insbesondere der zweite Teil 13, innerhalb der Ventilkammer 3 eine zweite Dichtfläche, ausgebildet als Kegelringfläche 11. Diese Kegelringfläche 11 ist um den gesamten Umfang des Ventilstößels 5 ausgebildet. Im unbestromten Zustand des Elektromagneten 4 wird diese Kegelringfläche 11 auf die zweite Ventilsitzbohrung 7 gedrückt und dichtet somit die Arbeitsleitung A gegenüber der Ventilkammer 3 ab.

Der Elektromagnet 4 umfasst eine Spule 16, einen Anker 17 und einen Polkern 18. Die Spule 16 ist um den Anker 17 und um den Polkern 18 gewickelt. Der Anker 17 und der Polkern 18 sind entlang der Ventillängsachse 38 hintereinander angeordnet. Im Polkern 18 befindet sich eine Bohrung entlang der Ventillängsachse 38. Diese Bohrung bildet eine lineare Führung 19 für zumindest einen Teil des Ventilstößels 5, insbesondere einen Anteil des ersten Teils 12 des Ventilstößels 5. Zwischen dem Polkern 18 und dem Anker 17 befindet sich im bestromten Zustand ein möglichst kleiner Spalt 20. Im unbestromten Zustand ist der Spalt 20 größer. Der Elektromagnet 4 umfasst des Weiteren eine Anschlussleitung bzw. Spannungsversorgung 21 zum Anschluss einer Steuerung/Regelung an das hydraulische 3/2-Magnetwegeventil 1. Der Anker 17 und der Polkern 18 sind in eine Hülse 23 eingebettet. Ferner befindet sich eine Isolierung 24 zwischen der Hülse 23 und der Spule 16.

Der Polkern 18 und der Anker 17 befinden sich in einem sogenannten Ankerraum 22. Dieser Ankerraum 22 befindet sich innerhalb der Hülse 23. Die Arbeitsleitung A ist gegenüber diesem Ankerraum 22 durch eine Spezialdichtung, insbesondere Nutringdichtung 25, abgedichtet. Diese Nutringdichtung 25 befindet sich zwischen dem Ventilstößel 5, insbesondere dem ersten Teil 12, und dem Polkern 18. Innerhalb des Ventilstößels 5 verläuft ein Verbindungskanal 15. Dieser Verbindungskanal 15 verbindet den Ankerraum 22 mit der Ventilkammer 3. Da die Ventilkammer 3 stets frei mit der Tankleitung T verbunden ist, ist somit auch der Ankerraum 22 stets drucklos. Der Verbindungskanal 15 wird gebildet durch eine Längsbohrung entlang der Ventillängsachse 38 im Ventilstößel 5 sowie durch Bohrungen senkrecht zur Ventillängsachse 38 von der Oberfläche des Ventilstößels 5 zu der längs verlaufenden Bohrung. Insbesondere durch die zweiteilige Ausführung des Ventilstößels 5 kann die Längsbohrung entlang der Ventillängsachse 38 im Inneren des Ventilstößels 5 hergestellt werden.

Das Ventilgehäuse 2 umfasst ein Basisgehäuseteil 26, einen ersten Ventilkammereinsatz 27 und einen zweiten Ventilkammereinsatz 28. Der erste Ventilkammereinsatz 27 und der zweite Ventilkammereinsatz 28 bilden zusammen die Ventilkammer 3. Das hydraulische 3/2-Magnetwegeventil 1 ist dabei wie folgt aufgebaut bzw. wird wie folgt montiert: Am Elektromagneten 4 befindet sich ein ringförmiger Fortsatz 29. In diesen Fortsatz 29 wird ein Teil des zweiten Ventilkammereinsatzes 28 eingebettet. Der zweite Ventilkammereinsatz 28 wiederum nimmt den ersten Ventilkammereinsatz 27 in sich auf. Die bereits erwähnte Hülse 23 des Elektromagneten 4 erstreckt sich bis zum zweiten Ventilkammereinsatz 28 und ist mit diesem verbunden. Die komplette Einheit bestehend aus Elektromagnet 4, zweitem Ventilkammereinsatz 28 und erstem Ventilkammereinsatz 27 wird in das Basisgehäuseteil 26 eingeschraubt. Hierzu ist am Basisgehäuseteil 26 ein Innengewinde und am Fortsatz 29 des Elektromagneten 4 ein entsprechendes Außengewinde ausgebildet. Die einzelnen Gehäusebestandteile sind gegeneinander abgedichtet.

Des Weiteren umfasst das Gehäuse 2 eine Kappe 30. Diese Kappe 30 umgreift den Elektromagneten 4 und sitzt am Basisgehäuseteil 26 auf.

Innerhalb des ersten Ventilkammereinsatzes 27 ist ein gebohrter Einsatz 35 eingebracht. In diesem gebohrten Einsatz 35 ist die erste Ventilsitzbohrung 6 ausgebildet. Darüber hinaus sitzt in dem ersten Ventilkammereinsatz 27 ein Filter 36. Dieser Filter 36 befindet sich außerhalb der Ventilkammer 3 und in der Druckleitung P.

Des Weiteren ist innerhalb des Basisgehäuseteils 26 eine Volumenausgleichseinheit 37 mit Tankraum 31 integriert. Diese Volumenausgleichseinheit 37 mit Tankraum 31 umfasst einen Volumenausgleichskolben 32, eine Ausgleichsfeder bzw. Längenausgleichsfeder 33 und ein Lager 35 für die Ausgleichsfeder 33. Der Tankraum 31 ist mit der Tankleitung T verbunden. Der Volumenausgleichskolben 32 definiert eine Wandung des Tankraums 31. Der Kolben 32 ist durch die Ausgleichsfeder 33 leicht federbelastet. Die Ausgleichsfeder 33 stützt sich auf einer Seite gegen den Volumenausgleichskolben 32 und auf der anderen Seite gegen das Federlager 34 ab. Das Federlager 34 ist stirnseitig in das Basisgehäuseteil 26 eingeschraubt.

Das hydraulische 3/2-Magnetwegeventil 1 ist weitgehend rotationssymmetrisch bezüglich der Ventillängsachse 38 ausgebildet. Von dieser Rotationssymmetrie weichen selbstverständlich die Druckleitungen P, Arbeitsleitungen A und Tankleitungen T ab. Die Druckleitung P und die Arbeitsleitung A münden an zumindest jeweils einer Stelle auf der Mantelfläche des Basisgehäuseteils 26. Dort sind Ringkanäle 39 ausgeführt. Diese Ringkanäle 39 werden mit O-Ring-Dichtungen 40 abgedichtet, wenn das in Cartridge-Bauart ausgeführte 3/2-Magnetwegeventil 1 in eine entsprechende Aufnahme eingeführt wird.

Fig. 15 zeigt das hydraulische 3/2-Magnetwegeventil 1 gemäß Ausführungsbeispiel im bestromten Zustand. Hier ist gut zu sehen, dass der Ventilstößel 5 gegenüber der Darstellung in Fig. 14 nach links bewegt wurde.

Dadurch ist die Arbeitsleitung A über die zweite Ventilsitzbohrung 7 direkt mit der Ventilkammer 3 und somit mit der Tankleitung T und dem Tankraum 31 verbunden. Die Druckleitung P ist durch den Sitz der Kugel 10 in der ersten Ventilsitzbohrung 6 blockiert und somit nicht mit der Ventilkammer 3 verbunden.

Fig. 16 zeigt einen Detailausschnitt aus Fig. 15. An dieser Darstellung kann insbesondere das Differenzflächenverhältnis erläutert werden. Zu beachten ist, dass dieses Differenzflächenverhältnis bei einer geschlossenen zweiten Ventilsitzbohrung 7 und somit bei der in Fig. 14 gezeigten unbestromten Ventilstellung zum Einsatz kommt. Wie die Fig. 16 zeigt, weist der Ventilstößel 5 an der Nutringdichtung 25 einen Dichtdurchmesser D1 auf. Die zweite Ventilsitzbohrung 7 ist mit einem Innendurchmesser D2 ausgeführt. Der Ventilstößel 5 weist in dem Bereich zwischen der Nutringdichtung 25 und der zweiten Ventilsitzbohrung 7 einen kleinsten Durchmesser D3 auf. Bei geschlossener zweiter Ventilsitzbohrung 7 wirkt nun der Druck in der Arbeitsleitung A auf folgende Flächen des Ventilstößels 5: Die erste Fläche berechnet sich durch (D2²/4 * π) - (D3²/4 * π). Die zweite Fläche berechnet sich durch (D1²/4 * π) - (D3²/4 * π). Dadurch, dass die erste Fläche kleiner als die zweite Fläche ist, wirkt im geschlossenen Zustand der zweiten Ventilsitzbohrung 7 der Arbeitsdruck in der gezeigten Darstellung nach rechts. Dadurch wird die Ventildruckfeder 14 unterstützt und die Kegelfläche 11 wird in die zweite Ventilsitzbohrung 7 gezogen.

Anhand des fünften Ausführungsbeispiels wurde aufgezeigt, wie ein hydraulisches 3/2-Magnetwegeventil 1, insbesondere in Cartridge-Bauweise, für eine leckölfreie Arbeitsweise ausgeführt werden kann. In der nicht bestromten Schaltstellung, gezeigt in Fig. 14, wird der Ventilstößel 5 durch die Druckfeder 14 mit der als Kegelfläche 11 ausgebildeten Seite in die zweite Ventilsitzbohrung 7 der Arbeitsleitung gedrückt und sperrt somit den Anschluss dieser Leitung gegenüber dem Tank öldicht ab. Der Ventilstößel 5 ist auf der Magnetseite zum Ankerraum 22 radial mit einer Nutringdichtung 25 ausgeführt. Der Dichtdurchmesser D1 des Ventilstößels 5 zum Ankerraum 22 ist größer ausgeführt als die zweite Ventilsitzbohrung 7. Dadurch entsteht ein definiertes Flächenverhältnis zwischen dem Kegelsitz und dem Abdichtdurchmesser D1 des Ankerraums 22. Wird nun die Arbeitsleitung A mit Druck beaufschlagt, so entsteht eine Differenzkraft über das Flächenverhältnis zwischen der Arbeitsleitung und dem abgedichteten Ankerraum 22, die den Ventilstößel 5 in Richtung des Elektromagneten 4 zieht und zusätzlich zur Federkraft gegen die zweite Ventilsitzbohrung 7 wirkt. Mit ansteigendem Druck in der Arbeitsleitung A erhöht sich die Dichtwirkung. Der Elektromagnet 4 ist bevorzugt so ausgelegt, dass ein Schalten gegen die Federkraft plus Differenzkraft verhindert wird. Die Druckleitung P und die Tankleitung T sind in dieser Stellung miteinander verbunden.

In der bestromten Schaltstellung gemäß Fig. 15 ist die Arbeitsleitung A drucklos, wobei der Ventilstößel 5 gegen die Federkraft mit seiner Kugel 10 die Druckleitung P öldicht abdichtet. Ein über die Druckleitung P angeschlossener Verbraucher, z. B. der Sperrraum 61, kann nun wirksam bis zum ausgelegten Betriebsdruck abgedichtet werden. Dieser Betriebsdruck ist abhängig von der Magnetkraft. In dieser Schaltstellung ist die Arbeitsleitung A drucklos mit der Tankleitung T verbunden. Dadurch kann sich in der Arbeitsleitung A kein Druck bzw. nur ein geringer Staudruck aufbauen.

Die Ausgestaltungen des vorgestellten 3/2-Magnetwegeventils sind, unabhängig von der Cartridge Bauweise und unabhängig von der Anzahl an Leitungen und/oder Schaltstellungen, auch auf weitere Ventilbauarten erfindungsgemäß anwendbar. Insbesondere die Kombination aus Kugelsitz und Kegelsitz in einem Ventil, insbesondere auf einem Stößel, und/oder das Differenzflächenverhältnis sind erfindungsgemäß auf weitere Ventile anwendbar.

Anhand der Fig. 17 und 18 wird nun die konstruktive Ausgestaltung des Magnetwegeventils 1 des Türschließers gemäß dem sechsten Ausführungsbeispiel genauer erläutert. Beide Figuren zeigen hier die unbestromte Schaltstellung mit offener Druckleitung P, wie sie in Fig. 13 auf der linken Seite symbolisch dargestellt ist. Gleiche bzw. funktional gleiche Bauteile sind in allen Ausführungsbeispielen mit den gleichen Bezugszeichen versehen. Insbesondere entspricht das Magnetwegeventil 1, wie es im sechsten Ausführungsbeispiel verwendet wird, dem Magnetwegeventil 1, wie es im fünften Ausführungsbeispiel verwendet wird, bis auf die im Folgenden beschriebenen Unterschiede.

Wie die Fig. 17 und 18 zeigen, sind im sechsten Ausführungsbeispiel gegenüber dem fünften Ausführungsbeispiel die Tankleitung T und die Arbeitsleitung A vertauscht. Dies bedeutet, dass die Arbeitsleitung stets über die freie Öffnung 8 mit der Ventilkammer 3 verbunden ist. Die Verbindung zwischen der Ventilkammer 3 und der Tankleitung T wird über die zweite Ventilsitzbohrung 7 und über die Kegelringfläche 11 gesteuert. Des Weiteren ist der Ventilstößel 5 im sechsten Ausführungsbeispiel einteilig ausgeführt. Darüber hinaus ist der Weg für den Druckausgleich zwischen dem Ankerraum 22 und der Tankleitung T im Magnetventil 1 gemäß dem sechsten Ausführungsbeispiel kürzer. Hier ist die Verbindung 15 als einfache, ebene Fläche zwischen dem Ankerraum 22 und der Tankleitung T ausgebildet. Es bedarf keiner Bohrungen im Ventilstößel 5. Die Verbindung 15 ist als plane Fläche auf dem Ventilstößel 5 oder durch Ausbildung des Ventilstößels 5 als Mehrkant ausgeführt.

Des Weiteren ist das Ventilgehäuse 2 im Magnetventil 1 gemäß dem Ausführungsbeispiel 6 etwas einfacher konstruiert. Die Ventilkammer 3 ist hier nicht mehr zweiteilig mit einem ersten Ventilkammereinsatz 27 und einem zweiten Ventilkammereinsatz 28 aufgebaut. Vielmehr ist hier nur ein Ventilkammereinsatz 27 verbaut.

Die Magnetventile gemäß dem vierten, fünften und sechsten Ausführungsbeispiel des Türschließers 41 können bevorzugt in allen hier vorgestellten Ausführungsbeispielen des Türschließers 41 eingesetzt werden.

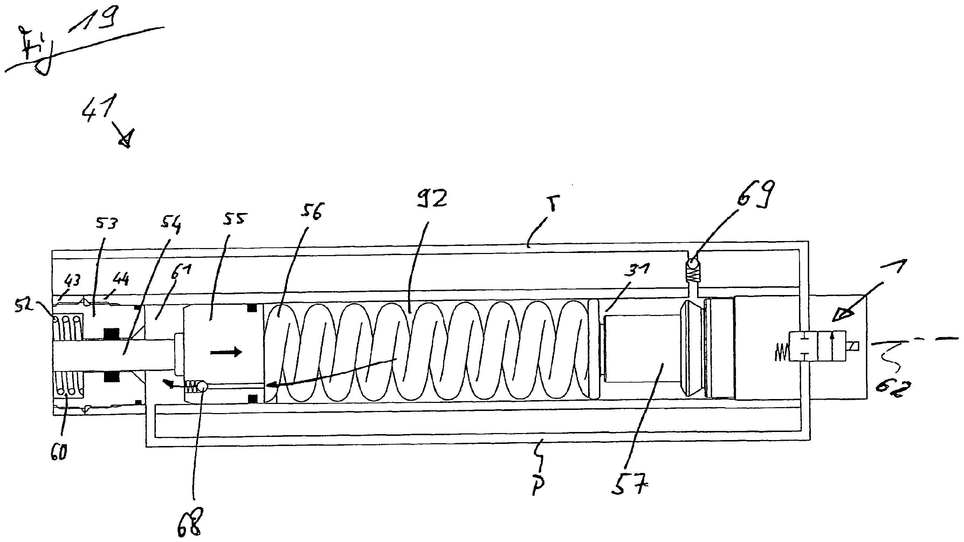

Fig. 19 zeigt einen Türschließer nach einem siebten Ausführungsbeispiel. Gleiche bzw. funktional gleiche Bauteile sind in allen Ausführungsbeispielen mit den gleichen Bezugszeichen versehen. Die im Rahmen des siebten Ausführungsbeispiels vorgestellte Anordnung zur Vermeidung einer sogenannten Rückfederung des Schließerfederspannkolbens 55 kann bevorzugt in allen hier vorgestellten Ausführungsbeispielen des Türschließers 41 angewandt werden.

Fig. 19 zeigt eine Ausbildung des dritten Rückschlagventils 68 im Schließerfederspannkolben 55 als federbelastetes Rückschlagventil. Der Raum innerhalb des Türschließergehäuses 42, insbesondere innerhalb des zweiten Türschließergehäuseteils 44, in welchem sich die Schließerfeder 56 befindet, wird hier als Schließerfederaufnahmeraum 92 bezeichnet. Dieser Schließerfederaufnahmeraum 92 ist ein Raum, welcher sich während des Öffnungsvorgangs der Türe verkleinert, da sich der Schließerfederspannkolben 55 nach rechts bewegt. Darüber hinaus zeigt Fig. 19 das vierte Rückschlagventil 69 ebenfalls als federbelastetes Rückschlagventil. Das dritte Rückschlagventil sperrt Hydraulikfluss aus dem Sperrraum 61 in den Schließerfederaufnahmeraum 92. Das vierte Rückschlagventil sperrt Hydraulikfluss aus dem Schließerfederaufnahmeraum 92 in die Tankleitung T.

Der Schließfederaufnahmeraum 92 und der Tankraum 31 sind hier ein Raum mit hydraulischem Verbund. Die in der Einstelleinheit 57 dargestellte Abstützscheibe für die Feder 56 ist keine hydraulische Abtrennwand.

Bei dem Druckaufbau im Sperrraum 61 werden alle dort enthaltenen elastischen Elemente, wie beispielsweise Dichtungen, Restluft oder auch das Hydraulikfluid selbst entsprechend komprimiert, was einen unerwünschten Volumenverlust nach sich zieht. Der Federspannkolben 55 gleicht diesen Volumenverlust aus, macht dabei aber einen geringen Folgehub. Letztendlich arretiert der Schließerfederspannkolben 55 nicht exakt an der gewünschten Stelle. Die in Fig. 19 dargestellte Anordnung reduziert diese Rückfederung, indem während des Öffnungsvorgangs aus dem Schließerfederaufnahmeraum 92 aktiv unter Vordruck gesetztes Hydrauliköl über das dritte Rückschlagventil 68 in den Sperrraum 61 umgepumpt wird. Es wird damit bewusst ein relativer Öffnungswiderstand ähnlich einer Öffnungsdämpfung erzeugt, um das Hydrauliköl vorzuspannen und somit Setzungsverhalten vorzuholen. Dank des vierten Rückschlagventils 69 kann das Hydrauliköl aus dem Schließerfederaufnahmeraum 92 nicht in Richtung der Tankleitung T entweichen. Das Hydrauliköl wird somit während des Öffnungsvorgangs im Schließerfederaufnahmeraum 92 durch den Schließerfederspannkolben 55 unter Vorspannung gebracht und strömt mit einem gewissen Vordruck in den Sperrraum 61. Dadurch wird die unerwünschte Rückfederung deutlich reduziert.

Ferner sind erfindungsgemäß folgende Gegenstände und bevorzugte Ausprägungen vorgesehen:
Vorteilhafterweise ist die Freilaufanordnung zwischen der Kolbenstange und der Kolbenbaugruppe angeordnet. Alternativ bevorzugt befindet sich die Freilaufanordnung in der Kolbenstange oder zwischen der Kolbenstange und der Schließerfeder, insbesondere zwischen der Kolbenstange und dem Schiießerfederspannkolben.

Ferner von Vorteil ist es, dass die Freilaufanordnung eine senkrecht zu einer Türschließerlängsachse stehende und fest mit der Kolbenstange verbundene erste Stirnfläche, und eine parallel zur ersten Stirnfläche und fest mit der Kolbenbaugruppe verbundene zweite Stirnfläche umfasst, wobei bei blockierter Schließerfeder die zweite Stirnfläche von der ersten Stirnfläche abhebt und somit entkoppelt. Durch zwei aneinander anliegende und abhebende Stirnflächen kann eine sehr einfache und effektive Freilaufanordnung als Verschiebekupplung realisiert werden.

Vorteilhafterweise ist in der Kolbenbaugruppe eine Tasche ausgebildet, wobei die Kolbenstange beweglich in der Tasche geführt ist. Alternativ kann die Tasche beispielsweise auch im Federspannkolben ausgeführt sein. In einer weiteren Alternative ist die Kolbenstange zweiteilig ausgeführt, wobei dann der eine Teil der Kolbenstange eine sich in Richtung der Türschließerlängsachse öffnende Tasche aufweist und der andere Teil der Kolbenstange in dieser Tasche translatorisch beweglich sitzt.

Vorteilhafterweise umfasst der Türschließer einen im Türschließergehäuse zwischen der Kolbenbaugruppe und der Kolbenstange geführten, fest mit der Kolbenstange verbundenen Zusatzkolben, wobei die erste Stirnfläche am Zusatzkolben ausgebildet ist. Kolbenstange und Zusatzkolben sind fest miteinander verbunden, d.h., sie bewegen sich entlang der Türschließerlängsachse stets gemeinsam.

In vorteilhafter Ausbildung des Zusatzkolbens ist vorgesehen, dass die Verbindung zwischen Kolbenstange und Zusatzkolben um eine erste Achse senkrecht zur Türschließerlängsachse schwenkbar ausgeführt ist. Durch diese schwenkbare Ausführung werden etwaige Kräfte, die nicht linear mit der Türschließerlängsachse verlaufen und somit zur Verklemmung führen könnten, vermieden.

Darüber hinaus ist vorteilhafterweise vorgesehen, dass die Verbindung zwischen Kolbenstange und Schließerfederspannkolben um eine zweite Achse senkrecht zur Türschließerlängsachse und senkrecht zur ersten Achse schwenkbar ausgeführt ist. Auch durch diese schwenkbare Verbindung zwischen Kolbenstange und Schließerfederspannkolben wird ein etwaiges Verklemmen vermieden.

Bei nicht gesperrtem Zustand des Sperrraums kann die Schließerfeder durch ihre Vorspannkraft über die Kolbenstange in direkten Druckkontakt innerhalb der Freilaufkupplung auf die Kolbenbaugruppe einwirken, bzw. in der entgegengesetzten Richtung die Kolbenbaugruppe auf die Kolbenstange einwirken. In diesem Funktionszustand besteht ein normaler Türschließerbetrieb, bei dem manuell die Schließerfeder gespannt wird und nach Freigabe der Tür die Schließerfeder über die Kolbenbaugruppe und die Abtriebswelle die Tür wieder in die Nullposition zurückbewegt. Wird dagegen die Schließerfeder hydraulisch arretiert, beispielsweise durch Bestromen eines Magnetventils, so kann das Hydrauliköl nicht mehr aus dem Sperrraum abfließen. Folglich kann nach einmaligem manuellen Spannen der Schließerfeder die Federkraft nicht mehr auf die Kolbenbaugruppe einwirken. Bei manueller Betätigung der Tür aus der Offenposition zurück in die Schließrichtung hebt die Kolbenstange innerhalb der Freilaufanordnung, insbesondere innerhalb der Verschiebekupplung, von der Kolbenbaugruppe ab. Die Kolbenbaugruppe selbst bewegt sich, angetrieben über die Tür und die Abtriebswelle, und führt einen geringen Hubweg aus. Innerhalb der Freilaufanordnung hat sich ein dem Hubweg entsprechender Abstand der ersten Stirnfläche zur zweiten Stirnfläche gebildet. Die Rückbewegung der Kolbenbaugruppe durch ein erneutes Öffnen der Tür erfolgt kraftfrei, was einer Freilauffunktion entspricht. Weitere manuelle Öffnungs- und Schließbewegungen der Tür erfolgen bei weithin gesperrtem Sperrraum beliebig oft und kraftfrei im Freilaufbetrieb. Erst nach Freigeben des Sperrraums kann sich die Schließerfeder wieder in einen entspannten Zustand zurückbewegen. Dabei wird in der Freilaufanordnung die erste Stirnfläche wieder mit der zweiten Stirnfläche in Anlage gebracht und die Kraft der Schließerfeder über die Kolbenbaugruppe und die Abtriebswelle auf die Tür übertragen. Damit wird die Tür sicher durch die gespeicherte Energie ohne zusätzliche manuelle Einwirkung geschlossen.

In bevorzugter Ausführung ist vorgesehen, dass die Abtriebswelle eine nockenförmige Abwälzkontur, insbesondere eine Nockenscheibe, umfasst, und die Kolbenbaugruppe zumindest eine auf der Abwälzkontur anliegende Kurvenrolle umfasst. Türschließer mit Gleitschienengestänge haben sich aus optischen Gründen in den letzten Jahren immer mehr durchgesetzt. Um gleichzeitig einen komfortablen Bedienungskomfort zu erreichen, d.h., ein mit zunehmendem Türwinkel abfallenden Öffnungswiderstand bzw. abfallendes Öffnungsmoment, wird für den erfindungsgemäßen Türschließer bevorzugt innerhalb des Türschließermechanismus die Nockentechnologie eingesetzt, um die Kraft zwischen der Kolbenbaugruppe und der Abtriebswelle zu übertragen.

In bevorzugter Ausführung der Kolbenbaugruppe ist vorgesehen, dass die Kolbenbaugruppe einen Dämpfungskolben mit einer ersten Kurvenrolle und einen Öffnungskolben mit einer zweiten Kurvenrolle umfasst, wobei die Abtriebswelle zwischen dem Dämpfungskolben und dem Öffnungskolben angeordnet ist. Die Kurvenrolle des Dämpfungskolbens und des Öffnungskolbens müssen in ständigem Kontakt mit der Abwälzkontur stehen, und wälzen sich so bei Verdrehen der Abtriebswelle auf der Abwälzkontur ab. Dadurch entsteht für den Dämpfungskolben und den Öffnungskolben ein Arbeitshub. Auf der längeren Seite des Türschließergehäuses wird über den Öffnungskolben und die Kolbenstange die Schließerfeder vorgespannt. Auf der anderen Seite wird der hydraulisch wirkende Dämpfungskolben verschoben. Durch die Verschiebung des Dämpfungskolbens wird Hydraulikvolumen verdrängt, wodurch mittels zwischen-geschalteter Drosselventile die Türgeschwindigkeit beim Schließvorgang kontrolliert bzw. gebremst werden kann. In Verbindung mit der Kraft der Schließerfeder entsteht über die Nockengeometrie der Abwälzkontur eine Kraftresultierende, die mit dem entsprechenden internen Hebelarm das Öffnungs- und Schließmoment erzeugt. Um den vorgestellten Türschließer möglichst schmalbauend zu konstruieren, sind der Öffnungskolben und der Dämpfungskolben bevorzugt in einer bestimmten Weise angeordnet: Der Dämpfungskolben liegt auf der einen Seite der Abtriebswelle und der Öffnungskolben auf der anderen Seite der Abtriebswelle, sodass die Abtriebswelle zwischen den beiden Kolben angeordnet ist. Infolgedessen ist kein direkter Kontakt des Öffnungskolbens mit dem Dämpfungskolben möglich. Diese sehr schmale Bauweise des Türschließers bedingt somit, dass eine Zusammenfassung der beiden Funktionen, Vorspannen der Schließerfeder und Dämpfung des Schließvorgangs, in einem Bauteil nicht unmittelbar möglich ist. Die Realisierung der hydraulischen Zusatzfunktion "Freilauf" bedarf somit aufwendiger Maßnahmen auf beiden Gehäuseseiten, da die Funktionsbereiche getrennt innerhalb des Gehäuses liegen. Zum Vergleich: Bei breitbauenden Bodentürschließern ist üblicherweise nur ein Kolben auf der Federseite vorhanden, der gleichzeitig die Schließerfedervorspannung und die Dämpfungsfunktion wahrnimmt. Dabei wird jedoch ein sogenannter Laschenwagen eingesetzt, der die Nockenkontur mit zwei darin gelagerten Rollen umfasst und eine ständige Kontrolle des Nocken-Rollenkontaktes sicherstellt. Bei Verwendung dieses Laschenwagens bedarf es somit keiner weiteren Überlegungen zur Sicherstellung des spielfreien Kontaktes zwischen den beiden Kolben der Kolbenbaugruppe und der Abwälzkontur. Jedoch ist solch ein Laschenwagen bei integriert eingesetzten und damit sehr schmal bauenden Türschließern, wie er hier vorgestellt wird, nicht möglich. Des Weiteren ist bei Verwendung der Nockentechnologie zu beachten, dass hier als Nachteil im Vergleich zu herkömmlichen Zahnstangentechnologien geringe Hub- und damit Volumenverdrängungen bei gleichzeitig hohen Federkrafterfordernissen vorliegen. Nockentürschließer benötigen somit tragfähige Lagerungen und aufwendige hydraulische Bauteilanordnungen. Es werden im Folgenden zwei verschiedene Varianten vorgestellt, die es ermöglichen, dass die zwei getrennten Kolben, der Öffnungskolben und der Dämpfungskolben, stets spielfreien Kontakt zur Abwälzkontur haben. Eine erste Variante verwendet Zugstangen und interne Spielausgleichsfedern. Die zweite Variante verwendet Druckfedern, die außen am Öffnungskolben und/oder Dämpfungskolben angreifen.

Bevorzugt ist vorgesehen, dass der Dämpfungskolben und der Öffnungskolben über Zugstangen miteinander verbunden sind. Da der Öffnungskolben und der Dämpfungskolben beidseitig der Abtriebswelle angeordnet sind, ist kein direkter Kontakt der beiden möglich. Die Zugstangen ermöglichen hier eine montage- und fertigungsfreundliche Verbindung der beiden Kolben. Des Weiteren bewirkt die Verwendung mehrerer Zugstangen eine wirksame Sicherung vor Verdrehung der beiden Kolben um die Türschließerlängsachse.

Ferner von Vorteil ist die Verwendung von genau vier Zugstangen. Die vier Zugstangen lassen sich gleichmäßig über den Querschnitt verteilen, sodass eine gleichmäßige Kraftübertragung möglich ist.

In besonders bevorzugter Ausführung ist vorgesehen, dass jeweils zwei der vier Zugstangen symmetrisch zur Türschließerlängsachse angeordnet sind. Dies bedeutet, dass jeweils zwei diagonal gegenüberliegende Zugstangen den gleichen Abstand zur Abtriebswelle aufweisen. Insbesondere sind die vier Zugstangen an den Ecken eines nur modellhaft vorgestellten Quadrates oder Rechtecks angeordnet. Die Abtriebswelle verläuft durch den Schnittpunkt der Diagonale dieses Quadrates oder Rechtecks. Durch diese Anordnung ist eine absolut gleichmäßige, parallel zur Türschließerlängsachse gerichtete Kraftübertragung zwischen Öffnungskolben und Dämpfungskolben möglich und ein Verklemmen der Kolbenbaugruppe wird so weitgehend vermieden.

In besonders bevorzugter Ausführung ist vorgesehen, dass zwei Zugstangen oberhalb der Abwälzkontur und beidseitig der Abtriebswelle angeordnet sind, und zwei weitere Zugstangen unterhalb der Abwälzkontur und beidseitig der Abtriebswelle angeordnet sind, sodass die Abwälzkontur mit ihrer vollständigen Höhe zwischen den beiden oberen Zugstangen und den beiden unteren Zugstangen angeordnet ist. Durch die oberhalb und unterhalb des Nockenbereichs bzw. der Abwälzkontur liegenden Zugstangen kann die volle Tragfähigkeit der Abwälzkontur erhalten bleiben.

Bevorzugt ist vorgesehen, dass die Kolbenbaugruppe zumindest zwei integrierte Spielausgleichsfedern umfasst, wobei zumindest zwei diagonal zueinander angeordnete Zugstangen mittels der Spielausgleichsfedern auf Zug belastet sind, um ein Spiel zwischen der Abwälzkontur und den Kurvenrollen auszugleichen. Diese zwei auf Zug belasteten Zugstangen dienen zum Spielausgleich zwischen den Kurvenrollen der beiden Kolben und der Abwälzkontur und die beiden anderen diagonalen Stangen dienen zur Verdrehsicherung und vermeiden somit Kippmomente und damit verbundene Reibung und Verklemmung von Öffnungskolben und Dämpfungskolben.

Bevorzugt sind die Spielausgleichsfedern im Dämpfungskolben und/oder im Öffnungskolben angeordnet. Es sind somit zum Spielausgleich zwischen den Kurvenrollen und der Abwälzkontur keine außen an die Kolbenbaugruppe angreifenden Federn notwendig. Die Kolbenbaugruppe muss sich somit nicht gegen ortsfeste Anteile des Türschließers abstützen und kann durch die interne Anordnung von Zugstangen und Spielausgleichsfedern für sich allein genommen den Spielausgleich sicherstellen.

In bevorzugter Weise ragen die Zugstangen durch die Spielausgleichsfedern hindurch, wobei die Spielausgleichsfedern als Druckfedern ausgebildet sind und gegen die Enden der Zugstangen drücken, sodass die Zugstangen auf Zug belastet werden. Die anderen Enden der Spielausgleichsfedern stützen sich gegen den Öffnungskolben oder den Dämpfungskolben. Die nicht federbelasteten Enden der Zugstangen sind fest im jeweils anderen Kolben verschraubt.

Alternativ oder zusätzlich zu der Verwendung von Zugstangen und Spielausgleichsfedern ist bevorzugt vorgesehen, dass zwischen den Dämpfungskolben und dem Türschließergehäuse eine erste Druckfeder angeordnet ist, wobei die erste Druckfeder zum Spielausgleich zwischen der Abwälzkontur und der ersten Kurvenrolle des Dämpfungskolbens ausgelegt ist. Diese erste Druckfeder beaufschlagt den Dämpfungskolben leicht in Richtung der Abtriebswelle.

Ferner ist es bevorzugt vorgesehen, dass zwischen dem Öffnungskolben und der Kolbenstange oder zwischen dem Öffnungskolben und dem Zusatzkolben oder zwischen dem Öffnungskolben und der Trennwand eine zweite Druckfeder angeordnet ist, wobei die zweite Druckfeder zum Spielausgleich zwischen der Abwälzkontur und der zweiten Kurvenrolle ausgelegt ist. Diese zweite Druckfeder dient, ähnlich wie die erste Druckfeder, zum Spielausgleich zwischen Kurvenrolle und Abwälzkontur. Bevorzugt sind die erste Druckfeder und/oder die zweite Druckfeder derart schwach ausgeführt, dass sie für den Benutzer kein spürbares Moment auf die Tür übertragen, sondern lediglich für den Spielausgleich in der Nockenmechanik sorgen.

In bevorzugter Ausführung ist vorgesehen, dass zwischen der Kolbenbaugruppe und der Kolbenstange oder zwischen der Kolbenbaugruppe und dem Zusatzkolben oder zwischen der Kolbenbaugruppe und der Trennwand eine zusätzliche Schließerfeder angeordnet ist, um die Kolbenbaugruppe im Freilauf leicht in Schließrichtung zu belasten, wobei die zusätzliche Schließerfeder schwächer ist als die Schließerfeder. Die Schließerfeder, die die Brandschutzfunktion erfüllt und äußerst stark ausgelegt ist, wird bevorzugt einmal gespannt und dann bis beispielsweise zum Brandfall über den Sperrraum blockiert. Bei der alltäglichen Verwendung der Tür ist es jedoch auch oft wünschenswert, dass die Tür sich nach dem Begehen wieder schließt, wenn auch nicht mit der Kraft einer starken Schließerfeder für den Notfall. Hierzu dient die zusätzliche leicht ausgelegte Schließerfeder. Insbesondere wird diese zusätzliche Schließerfeder nach EN1 oder EN2 gemäß DIN EN1154 ausgelegt. Es wurde bereits eine sogenannte zweite Druckfeder zum Spielausgleich zwischen der Kurvenrolle des Öffnungskolbens und der Abwälzkontur beschrieben. Diese zweite Druckfeder wird bevorzugt durch die zusätzliche Schließerfeder ersetzt. Alternativ kann auch die Verwendung von kolbenbaugruppeninternen Zugstangen und Spielausgleichsfedern mit der zusätzlichen Schließerfeder kombiniert werden.

Vorteilhafterweise ist vorgesehen, dass ein federbelastetes Rückschlagventil zwischen dem Sperrraum und einem sich während des Öffnungsvorgangs der Tür verkleinernden Raum angeordnet ist. Dieser sich während des Öffnungsvorgangs verkleinernde Raum ist insbesondere der Aufnahmeraum für die Schließerfeder. Das federbelastete Rückschlagventil sperrt in Richtung des sich verkleinernden Raums. Im Sperrraum wird erfindungsgemäß ein hydraulischer Druck aufgebaut und gehalten, um somit die Schließerfeder zu arretieren. Zum Druckaufbau im Sperrraum werden alle enthaltenen, elastischen Elemente, wie zum Beispiel Dichtungen, Restluft oder auch das Hydrauliköl selbst, entsprechend komprimiert. Dies zieht einen unerwünschten Volumenverlust nach sich. Der Schließerfederspannkolben gleicht diesen Volumenverlust zwar aus, macht dabei aber einen geringen Folgehub. Dieser Folgehub überträgt sich auf die Kolbenstange und somit auf die Kolbenbaugruppe, die Abtriebswelle und die Tür. Dies führt zu einer Rückdrehung der Tür um einige Winkelgrade bei Verwendung der Feststellfunktion. Falls die Freilauffunktion verwendet wird, führt der Folgehub dazu, dass die Tür nicht mehr vollständig bis zur gewünschten Position geöffnet werden kann. Diesen unerwünschten Effekt nennt man Rückfederung, welcher sich insbesondere bei begrenztem Türöffnungswinkel, vorgegeben durch bauliche Gegebenheiten, bemerkbar macht. Dieser Effekt ist insbesondere bei Türschließern mit Nockentechnologie aufgrund des geringen Drehwinkel-Hub-Verhältnisses stark ausgeprägt. Die hier vorgestellte Anordnung mit dem federbelasteten Rückschlagventil reduziert diese Rückfederung, indem während des Öffnungsvorganges aus einem sich in Öffnungsrichtung verkleinernden Druckraum aktiv unter Vordruck gesetztes Hydrauliköl über das Rückschlagventil in den Sperrraum umgepumpt wird. Es wird dabei bewusst ein relativer Öffnungswiderstand ähnlich einer Öffnungsdämpfung erzeugt, um das Hydrauliköl vorzuspannen und Setzungsverhalten vorzuholen. Bei vorbekannten Anordnungen wird während des Öffnungsvorgangs das Hydrauliköl nur passiv aus einem Tankraum in Druckräume angesaugt, was teilweise sogar geringen Unterdruck bewirken kann. Die elastischen Elemente entspannen sich damit vollständig und benötigen wieder ein relativ hohes Ausgleichsvolumen mit entsprechendem Folgehub, um wieder einen für die Federkraft ausreichenden Haltedruck zu ermöglichen. Dabei besteht eine maximale Druckdifferenz. Im hier beschriebenen Fall erfolgt das Setzungsverhalten der elastischen Elemente im Sperrraum deshalb unter einer geringen Druckdifferenz, wodurch der Volumenverlust und damit der Folgehub geringer ausfällt. Entsprechend ist die Rückdrehung bzw. die Rückfederung der Kolbenbaugruppe aus der beabsichtigten Stellung deutlich geringer.

Bevorzugt ist das Rückschlagventil so angeordnet, dass Hydrauliköl im sich verkleinernden Raum durch den Öffnungsvorgang unter Vordruck gesetzt wird und so aktiv durch das Rückschlagventil hindurch in den Sperrraum umgepumpt wird.

Vorteilhafterweise ist das Rückschlagventil im Schließerfederspannkolben angeordnet.

Ferner ist es von Vorteil, dass der sich verkleinernde Raum während des Öffnungsvorgangs mit Ausnahme des Rückschlagventils verschlossen ist.

Insbesondere wird dieses Verschließen dadurch erreicht, dass ein weiteres Rückschlagventil zwischen dem sich verkleinernden Raum und der Tankleitung angeordnet ist, wobei das weitere Rückschlagventil in Richtung der Tankleitung sperrt. Dadurch wird beispielsweise im Aufnahmeraum der Schließerfeder befindliches Hydrauliköl während des Öffnungsvorgangs vorgespannt und kann über das federbelastete Rückschlagventil im Schließerfederspannkolben in den Sperrraum umgepumpt werden.

Die Erfindung umfasst des Weiteren ein hydraulisches 3/2-Magnetwegeventil, umfassend ein Ventilgehäuse, einen Elektromagneten und einen Ventilstößel. In das Gehäuse ist eine Ventilkammer integriert. Diese Ventilkammer umfasst eine erste Ventilsitzbohrung als Verbindung zu einer ersten Leitung, insbesondere Druckleitung, eine zweite Ventilsitzbohrung als Verbindung zu einer zweiten Leitung, insbesondere Arbeitsleitung, und eine freie Öffnung zu einer dritten Leitung, insbesondere Tankleitung. Die Öffnung wird als "frei" bezeichnet, da sie in jeder Schaltstellung des Ventils die Ventilkammer mit der dritten Leitung verbindet. Der Ventilstößel ist zumindest teilweise innerhalb der Ventilkammer angeordnet und wird durch den Elektromagneten linear bewegt. Des Weiteren umfasst der Ventilstößel innerhalb der Ventilkammer eine der ersten Ventilsitzbohrung zugewandte erste Dichtfläche und eine der zweiten Ventilsitzbohrung zugewandte zweite Dichtfläche, sodass wahlweise die erste Ventilsitzbohrung oder die zweite Ventilsitzbohrung verschließbar ist. Des Weiteren erstreckt sich der Ventilstößel aus der Ventilkammer hinaus durch die zweite Ventilsitzbohrung und durch die zweite Leitung hindurch zum Elektromagneten. Dadurch, dass sich der Ventilstößel aus der Ventilkammer hinaus erstreckt, kann der Ventilstößel mit dem Elektromagneten verbunden bzw. teilweise in den Elektromagneten integriert werden. Bei geschlossener zweiter Ventilsitzbohrung wird über ein Differenzflächenverhältnis der Ventilstößel durch den Druck der zweiten Leitung, insbesondere Arbeitsleitung, in die zweite Ventilsitzbohrung gezogen. Diese Anordnung mit Differenzflächenverhältnis begünstigt die leckölfreie Abdichtung der zweiten Ventilsitzbohrung.

Dieses Differenzflächenverhältnis wird insbesondere dadurch erreicht, dass ein Dichtdurchmesser des Ventilstößels außerhalb der Ventilkammer größer ist als ein Durchmesser der zweiten Ventilsitzbohrung. Der Dichtdurchmesser ist dabei an einer Dichtung zwischen Ventilstößel und Elektromagnet definiert.

Bevorzugt wird das Differenzflächenverhältnis erreicht, indem der Durchmesser des Ventilstößels außerhalb der Ventilkammer größer ausgeführt wird als der Bohrungsdurchmesser der zweiten Ventilsitzbohrung. Dadurch kann der Druck der zweiten Leitung vor der Ventilkammer bei einer geschlossenen zweiten Ventilsitzbohrung die Kraft der Druckfeder unterstützen und die zweite Dichtfläche in die zweite Ventilsitzbohrung ziehen.

In einer weiteren bevorzugten Ausbildung ist der Ventilstößel zumindest zweiteilig ausgebildet. Hierzu umfasst der Ventilstößel einen ersten Teil und einen zweiten Teil, wobei der erste Teil linear beweglich im Elektromagneten geführt ist und der zweite Teil in den ersten Teil eingeschraubt ist. Dadurch ist der zweite Teil fest mit dem ersten Teil verbunden und zusammen mit dem ersten Teil linear beweglich. Insbesondere zur Ausbildung des Differenzflächenverhältnisses ist diese zweiteilige Ausführung des Ventilstößels besonders montagefreundlich. Dadurch kann insbesondere der Dichtdurchmesser größer ausgeführt werden als der Bohrungsdurchmesser der zweiten Ventilsitzbohrung.

Des Weiteren ist es bevorzugt vorgesehen, dass zwischen dem Ventilstößel und einem Ankerraum des Elektromagneten eine Dichtung, insbesondere eine Nutringdichtung, angeordnet ist. Diese Dichtung befindet sich am bereits diskutierten Dichtdurchmesser zwischen Ventilstößel und Elektromagnet. Besonders bevorzugt ist der Ankerraum über einen durch den Ventilstößel hindurch verlaufenden Verbindungskanal stets mit der dritten Leitung, insbesondere Tankleitung, frei verbunden. Dadurch wird ein Druckaufbau im Ankerraum bei möglichen Leckagen dieser Nutringdichtung vermieden. Der Verbindungskanal innerhalb des Ventilstößels verläuft vom Ankerraum durch den Ventilstößel hindurch in die Ventilkammer. Wie bereits beschrieben, ist die Ventilkammer stets frei mit der dritten Leitung, insbesondere Tankleitung, verbunden.

Alternativ zu dem zuerst beschriebenen hydraulischen Magnetventil umfasst die Erfindung ein hydraulisches Magnetventil, insbesondere hydraulisches 3/2-Magnetventil, umfassend ein Ventilgehäuse, eine in das Ventilgehäuse integrierte Ventilkammer mit einer ersten Ventilsitzbohrung als Verbindung zu einer ersten Leitung, insbesondere Druckleitung, einer freien Öffnung zu einer zweiten Leitung, insbesondere Arbeitsleitung, und einer zweiten Ventilsitzbohrung als Verbindung zu einer dritten Leitung, insbesondere Tankleitung. Ferner umfasst dieses hydraulische Magnetwegeventil einen Elektromagneten und einen durch den Elektromagneten bewegbaren und teilweise in der Ventilkammer angeordneten Ventilstößel. Der Ventilstößel umfasst dabei innerhalb der Ventilkammer eine der ersten Ventilsitzbohrung zugewandte erste Dichtfläche und eine der zweiten Ventilsitzbohrung zugewandte zweite Dichtfläche, sodass wahlweise die erste Ventilsitzbohrung oder die zweite Ventilsitzbohrung verschließbar ist. Ferner erstreckt sich der Ventilstößel aus der Ventilkammer hinaus durch die zweite Ventilsitzbohrung hindurch zum Elektromagneten.

In bevorzugter Ausführung des alternativen hydraulischen Magnetwegventils ist vorgesehen, dass am Ventilstößel entlang oder im Ventilstößel eine Verbindung der dritten Leitung zu einem Ankerraum des Elektromagneten besteht, sodass ein Druckaufbau im Ankerraum vermieden wird. Insbesondere wird diese Verbindung dadurch realisiert, dass eine plane Fläche am Ventilstößel ausgeführt ist, oder dass der Ventilstößel als Mehrkant, insbesondere Sechskant, gefertigt ist.

Im Folgenden werden vorteilhafte Ausgestaltungen der beiden erfindungsgemäßen hydraulischen Magnetwegeventile beschrieben:
In bevorzugter Ausführung ist vorgesehen, dass ein Durchmesser der ersten Ventilsitzbohrung kleiner ist als ein Durchmesser der zweiten Ventilsitzbohrung.

In bevorzugter Ausführung ist zwischen der ersten Ventilsitzbohrung und dem Ventilstößel eine Druckfeder angeordnet. Das erfindungsgemäße Ventil kann somit in der Variante mit Kugel als federbelastetes Kugel-Kegel-Sitzventil bezeichnet werden.

In einer weiteren vorteilhaften Ausgestaltung ist vorgesehen, dass im unbestromten Zustand des Elektromagneten die zweite Dichtfläche, insbesondere Kegelfläche, die zweite Ventilsitzbohrung abdichtet, und dass im bestromten Zustand des Elektromagneten die erste Dichtfläche, insbesondere konvexe Oberfläche, die erste Ventilsitzbohrung abdichtet. Die bevorzugt vorgesehene Druckfeder dient dazu, dass im unbestromten Zustand die zweite Dichtfläche des Ventilstößels in die zweite Ventilsitzbohrung gedrückt wird.

Bevorzugt umfasst die erste Dichtfläche eine konvexe Oberfläche, insbesondere Kugel. Ferner bevorzugt umfasst die zweite Dichtfläche eine Kegelfläche, insbesondere eine Kegelringfläche. Durch lineares Verschieben bzw. Bewegen des Ventilstößels wird wahlweise die erste Ventilsitzbohrung mit der konvexen Oberfläche oder die zweite Ventilsitzbohrung mit der Kegelfläche verschlossen. Ein Klemmen oder Hängenbleiben in der Schaltstellung unter Druck wird durch die Kugelventilausführung mit der konvexen Oberfläche wirksam vermieden. Ferner umfasst die Erfindung bevorzugt einen Filter, insbesondere in der ersten Leitung. Besonders bevorzugt wird der Filter außerhalb der Ventilkammer direkt vor dem Einlauf in die erste Ventilsitzbohrung angeordnet. Der Filter verhindert eine Verschmutzung des Öls und insbesondere eine Verschmutzung der beiden Ventilsitze. In einer weiteren bevorzugten Ausführung liegt die erste Ventilsitzbohrung direkt gegenüber der zweiten Ventilsitzbohrung. In bevorzugter Ausführung umfasst der Elektromagnet eine Spule, einen Anker, einen Polkern sowie einen Spalt zwischen Polkern und Anker. Der Polkern umfasst eine Bohrung entlang der Längsachse des Ventilstößels und bietet somit eine Aufnahme und eine lineare Führung für den Ventilstößel. Des Weiteren bevorzugt umfassen die erfindungsgemäßen Magnetwegeventile eine Steuerung/Regelung für den Elektromagneten. Mit dieser Steuerung/Regelung kann der Elektromagnet bestromt und unbestromt geschaltet werden.

Ferner umfasst die Erfindung bevorzugt ein hydraulisches Cartridge-Magnetwegeventil, als 3/2-Magnetwegeventil, umfassend eines der soeben vorgestellten hydraulischen Magnetwegeventile, wobei das Gehäuse zum zumindest teilweisen Einführen in eine Ventilaufnahme ausgebildet ist. Diese Ventilaufnahme befindet sich in einem Bauteil, welches das Cartridge-3/2-Magnetwegeventil integral aufnimmt. Besonders bevorzugt werden die erste Leitung, insbesondere Druckleitung, und die zweite Leitung, insbesondere Arbeitsleitung, bezüglich der Längsachse des Ventilstößels radial bzw. senkrecht nach außen geführt. Des Weiteren befinden sich bevorzugt O-Ring-Dichtungen seitlich der nach außen geführten ersten und zweiten Leitungen auf der Oberfläche des Ventilgehäuses, sodass durch Einführen des Cartridge-Gehäuses diese Leitungen druckdicht angeschlossen werden können. Besonders bevorzugt umfasst das Ventilgehäuse hierzu in Umfangsrichtung verlaufende Ringkanäle. Von diesen Ringkanälen aus können bevorzugt mehrere radial gerichtete Kanäle für die erste Leitung und/oder mehrere radial gerichtete Kanäle für die zweite Leitung zur Ventilkammer führen.

Ferner ist es bevorzugt, dass das hydraulische Cartridge-Magnetwegeventil eine Volumenausgleichseinheit mit Tankraum umfasst. Diese Volumenausgleichseinheit mit Tankraum ist in das Ventilgehäuse integriert oder ist an das Ventilgehäuse angeflanscht. Der Tankraum ist bevorzugt mit der dritten Leitung verbunden. Das Ventil baut sich dabei bevorzugt entlang der Längsachse des Ventilstößels wie folgt auf: Die Ventilkammer mit Ventilstößel ist mittig angeordnet. Auf der einen Seite der Kammer ist die Volumenausgleichseinheit mit Tankraum integriert oder angeflanscht. Auf der anderen Seite der Ventilkammer wird der Elektromagnet montiert. Dadurch kann das hydraulische Cartridge-Magnetwegeventil mit der Volumenausgleichseinheit voran in ein Bauteil eingeschoben werden. Der Elektromagnet und insbesondere ein Stecker am Elektromagnet ragen dabei bevorzugt aus dem Bauteil hervor. In bevorzugter Ausbildung ist der Tankraum der Volumenausgleichseinheit mittels eines Volumenausgleichskolbens und einer Ausgleichsfeder bzw. Druckfeder leicht druckbelastet.

Des Weiteren umfasst die Erfindung einen Türschließer, insbesondere einen Drehtürschließer, mit Freilauffunktion, umfassend eines der soeben beschriebenen hydraulischen Magnetventile oder eines der hydraulischen Cartridge-Magnetventile, wobei die Ventilaufnahme im Türschließer ausgebildet ist. Das hydraulische Magnetventil oder Cartridge-Magnet-ventil ist somit in das Gehäuse des Türschließers integriert oder angeflanscht und dient zur Steuerung der Hydraulik zwischen dem Schließdämpfungsraum, dem Sperrraum und dem Tankraum bzw. der Tankleitung.

Der Türschließer mit dem hydraulischen Magnetwegeventil umfasst des Weiteren ein Türschließergehäuse, eine mit einer Tür verbindbare Abtriebswelle, eine mit der Abtriebswelle verbundene und im Türschließergehäuse geführte Kolbenbaugruppe, eine Schließerfeder, eine zur Verbindung der Kolbenbaugruppe mit der Schließerfeder angeordnete Kolbenstange, eine Freilaufanordnung, welche dazu ausgebildet ist, eine translatorische Bewegung der Kolbenbaugruppen entkoppelt von der Schließerfeder bei blockierter Schließerfeder zu ermöglichen, und einen zum Blockieren der Schließerfeder ausgebildeten hydraulischen Sperrraum.

Die vorab beschriebenen vorteilhaften Ausgestaltungen des erfindungsgemäßen Türschließers finden entsprechende vorteilhafte Anwendung auf den Türschließer mit dem hydraulischen Magnetwegeventil bzw. dem hydraulischen Cartridge-Magnetwegeventil.

### Bezugszeichenliste

- 1: 3/2-Magnetwegeventil
- 2: Ventilgehäuse
- 3: Ventilkammer
- 4: Elektromagnet
- 5: Ventilstößel
- 6, 7: Ventilsitzbohrungen
- 8: freie Öffnung
- 9: konvexe Oberfläche
- 10: Kugel
- 11: Kegelringfläche
- 12: erster Teil
- 13: zweiter Teil
- 14: Ventildruckfeder
- 15: Verbindungskanal
- 16: Spule
- 17: Anker
- 18: Polkern
- 19: lineare Führung
- 20: Spalt
- 21: Anschlussleitung
- 22: Ankerraum
- 23: Hülse
- 24: Isolierung
- 25: Nutringdichtung
- 26: Basisgehäuseteil
- 27: erster Ventilkammereinsatz
- 28: zweiter Ventilkammereinsatz
- 29: Fortsatz
- 30: Kappe
- 31: Tankraum
- 32: Volumenausgleichskolben
- 33: Ausgleichsfeder
- 34: Federlager
- 35: gebohrter Einsatz
- 36: Filter
- 37: Volumenausgleichseinheit
- 38: Ventillängsachse
- 39: Ringkanäle
- 40: O-Ringabdichtungen
- 41: Türschließer
- 42: Türschließergehäuse
- 43: erstes Türschließergehäuseteil
- 44: zweites Türschließergehäuseteil
- 45: erste Druckfeder
- 46: Dämpfungskolben
- 47: erste Kurvenrolle
- 48: Abtriebswelle, ausgebildet als Nockenwelle
- 49: Abwälzkontur
- 50: zweite Kurvenrolle
- 51: Öffnungskolben
- 52: zweite Druckfeder
- 53: Gehäusetrennwand
- 54: Kolbenstange
- 55: Schließerfederspannkolben
- 56: Schließerfeder
- 57: Einstelleinheit für die Schließerfedervorspannung
- 58: Schließdämpfungsraum
- 59: Kolbenbaugruppeninnenraum, insb. Nockenwellenraum
- 60: Öffnungsdämpfungsraum
- 61: Sperrraum
- 62: Türschließerlängsachse
- 63: zweites Drosselventil
- 64: drittes Drosselventil
- 65: erstes Drosselventil
- 66: erstes Rückschlagventil
- 67: zweites Rückschlagventil
- 68: drittes Rückschlagventil
- 69: viertes Rückschlagventil
- 70: Gleitringdichtung
- 71: Tasche
- 72: zweite Stirnfläche, insb. Taschenboden
- 73: Kolbenführung
- 74: erste Stirnfläche
- 75: zweite gedrosselte Verbindung
- 76: dritte gedrosselte Verbindung
- 77: erste ungedrosselte Verbindung
- 78: erste gedrosselte Verbindung
- 79: erste Achse
- 80: zweite Achse
- 81: erste Zugstange
- 82: zweite Zugstange
- 83: dritte Zugstange
- 84: vierte Zugstange
- 85: Abtriebsachse
- 86: integrierte Spielausgleichsfedern
- 87: Verschraubung
- 88: Federspannmuttern
- 89: erster Abdichtungsflansch
- 90: zweiter Abdichtungsflansch
- 91: Höhe der Abwälzkontur
- 92: Schließerfederaufnahmeraum
- 93: Absatz
- 94: Kolbenbaugruppe
- 95: Zusatzkolben
- P: erste Leitung, insb. Druckleitung
- A: zweite Leitung, insb. Arbeitsleitung
- T: dritte Leitung, insb. Tankleitung

## Patentansprüche

1. Türschließer (41), insbesondere Drehtürschließer, mit Feststellfunktion oder Freilauffunktion, umfassend ein Türschließergehäuse (42), eine mit einer Tür verbindbare Abtriebswelle (48), eine mit der Abtriebswelle (48) verbundene und im Türschließergehäuse (42) geführte Kolbenbaugruppe (94), eine Schließerfeder (56), eine zur Verbindung der Kolbenbaugruppe (94) mit der Schließerfeder (56) angeordnete Kolbenstange (54), einen zum Blockieren der Schließerfeder (56) ausgebildeten hydraulischen Sperrraum (61), und ein Magnetwegeventil (1), wobei auf einer der Kolbenstange (54) abgewandten Seite der Kolbenbaugruppe (94) ein Schließdämpfungsraum (58) zwischen einem Stirnende des Türschließergehäuses (42) und der Kolbenbaugruppe (94) ausgebildet ist, wobei die Kolbenstange (54) fest mit einem Schließerfederspannkolben (55) verbunden ist, der im Türschließergehäuse (42) geführt ist und an der Schließerfeder (56) anliegt, und wobei das Magnetwegeventil (1) zumindest die Drücke im Schließdämpfungsraum (58) und im Sperrraum (61) steuert, und wobei vom Sperrraum (61) eine erste hydraulische Leitung zum Magnetwegeventil (1) führt, vom Schließdämpfungsraum (58) eine zweite Leitung zum Magnetwegeventil (1) führt, und vom Magnetwegeventil (1) eine dritte Leitung zu einem Tankraum (31) führt, und eine im Türschließergehäuse (42) zwischen der Kolbenbaugruppe (94) und der Schließerfeder (56) angeordnete fluiddichte Trennwand (53), wobei die Kolbenstange (54) fluiddicht durch die Trennwand (53) verläuft, **dadurch gekennzeichnet, dass** das Magnetwegeventil (1) ein 3/2-Magnetwegeventil ist und vom Sperrraum (61) die erste hydraulische Leitung, insbesondere eine Druckleitung (P), zum Magnetwegeventil (1) führt, vom Schließdämpfungsraum (58) die zweite Leitung, insbesondere eine Arbeitsleitung (A), zum Magnetwegeventil (1) führt, und vom Magnetwegeventil (1) die dritte Leitung, insbesondere Tankleitung (T), zu dem Tankraum (31) führt.

2. Türschließer nach Anspruch 1, **dadurch gekennzeichnet, dass** zwischen der Trennwand (53) und dem Schließerfederspannkolben (55) der Sperrraum (61) ausgebildet ist.

3. Türschließer nach einem der vorhergehenden Ansprüche, **dadurch gekennzeichnet, dass** die Freilaufanordnung als Verschiebekupplung ausgebildet ist, welche ausschließlich Druckkräfte zwischen der Schließerfeder (56) und der Kolbenbaugruppe (94) überträgt.

4. Türschließer nach einem der vorhergehenden Ansprüche, **dadurch gekennzeichnet, dass** die Abtriebswelle (48) eine nockenförmige Abwälzkontur (49), insbesondere Nockenscheibe, umfasst, und die Kolbenbaugruppe (94) zumindest eine auf der Abwälzkontur (49) anliegende Kurvenrolle (47, 50) umfasst.

5. Türschließer nach einem der vorhergehenden Ansprüche, **gekennzeichnet durch** einen Öffnungsdämpfungsraum (60) zwischen der Kolbenbaugruppe (94) und der Trennwand (53) oder zwischen der Kolbenbaugruppe (94) und dem Zusatzkolben (95), und eine erste gedrosselte Verbindung (78) zwischen dem Öffnungsdämpfungsraum (60) und dem Tankraum (31).

6. Türschließer nach Anspruch 5, **gekennzeichnet durch** eine erste ungedrosselte Verbindung (77) zwischen dem Öffnungsdämpfungsraum (60) und dem Tankraum (31), wobei die erste gedrosselte Verbindung (78) stets offen ist und die erste ungedrosselte Verbindung (77) je nach Stellung der Kolbenbaugruppe (94) verschlossen oder offen ist.

7. Türschließer nach einem der vorhergehenden Ansprüche, **gekennzeichnet durch** zumindest eine weitere gedrosselte Verbindung (75, 76), welche zwischen dem Schließdämpfungsraum (58) und dem Tankraum (31) angeordnet ist.

8. Türschießer nach Anspruch 1 und einem der Ansprüche 5 bis 7, **dadurch gekennzeichnet, dass** das Magnetwegeventil (1) in einer ersten Schaltstellung die erste Leitung mit der dritten Leitung verbindet und die zweite Leitung blockiert, und in einer zweiten Schaltstellung die zweite Leitung mit der dritten Leitung verbindet und die erste Leitung blockiert.

9. Türschließer nach Anspruch 1 und einem der Ansprüche 5 bis 7, **dadurch gekennzeichnet, dass** das Magnetwegeventil (1) in einer ersten Schaltstellung die erste Leitung mit der zweiten Leitung verbindet, und in einer zweiten Schaltstellung die zweite Leitung mit der dritten Leitung verbindet und die erste Leitung blockiert.

10. Türschließer nach einem der vorhergehenden Ansprüche, **dadurch gekennzeichnet, dass** das Magnetwegeventil im unbestromten Zustand die Schließerfeder (56) freigibt und im bestromten Zustand den Freilauf ermöglicht.

## Claims

1. A door closer (41), in particular a swing door closer, having a hold-open function or a free-swing function, comprising a door closer housing (42), an output shaft (48), which is connectable to a door, a piston sub-assembly (94), which is connected to the output shaft (48) and guided within the door closer housing (42), a closer spring (56), a piston rod (54) disposed for the connection of the piston sub-assembly (94) to the closer spring (56), a hydraulic blocking compartment (61) configured for blocking the closer spring (56), and a directional magnetic valve (1), wherein, on a side of the piston sub-assembly (94) facing away from the piston rod (54), a closing dampening compartment (58) is configured between a front end of the door closer housing (42) and of the piston sub-assembly (94), wherein the piston rod (54) is firmly connected to a closer spring tensioning piston (55), which is guided within the door closer housing (42) and abuts against the closer spring (56), and wherein the directional magnetic valve (1) controls at least the pressures within the closing dampening compartment (58) and within the blocking compartment (61),
and wherein a first hydraulic line runs from the blocking compartment (61) to the directional magnetic valve (1), a second line runs from the closing dampening compartment (58) to the directional magnetic valve (1), and a third line runs from the directional magnetic valve (1) to a reservoir compartment (31), and a fluid-tight separation wall (53) disposed within the door closer housing (42) between the piston sub-assembly (94) and the closer spring (56), wherein the piston rod (54) extends in a fluid-tight manner through the separation wall (53),
**characterized in that** the directional magnetic valve (1) is a 3/2 directional magnetic valve, and the first hydraulic line, in particular a pressure line (P), runs from the blocking compartment (61) to the directional magnetic valve (1), the second line, in particular an operating line (A), runs from the closing dampening compartment (58) to the directional magnetic valve (1), and the third line, in particular the reservoir line (T), runs from the directional magnetic valve (1) to the reservoir compartment (31).

2. The door closer according to claim 1, **characterized in that** the blocking compartment (61) is configured between the separation wall (53) and the closer spring tensioning piston (55).

3. The door closer according to any of the preceding claims, **characterized in that** the free-swing arrangement is configured as a displacement coupling, which exclusively transmits pressure forces between the closer spring (56) and the piston sub-assembly (94).

4. The door closer according to any of the preceding claims, **characterized in that** the output shaft (48) comprises a cam-shaped rolling contour (49), in particular a cam-disc, and the piston sub-assembly (94) comprises at least one cam roller (47, 50) resting on the rolling contour (49).

5. The door closer according to any of the preceding claims, **characterized by** an opening dampening compartment (60) between the piston sub-assembly (94) and the separation wall (53) or between the piston sub-assembly (94) and the additional piston (95), and a first throttled connection (78) between the opening dampening compartment (60) and the reservoir compartment (31).

6. The door closer according to claim 5, **characterized by** a first unthrottled connection (77) between the opening dampening compartment (60) and the reservoir compartment (31), wherein the first throttled connection (78) is always open, and depending on the position of the piston sub-assembly (94), the first unthrottled connection (77) is closed or open.

7. The door closer according to any of the preceding claims, **characterized by** at least one further throttled connection (75, 76), which is disposed between the closing dampening compartment (58) and the reservoir compartment (31).

8. The door closer according to claim 1 and any of the claims 5 to 7, **characterized in that** the directional magnetic valve (1), in a first switching position, connects the first line to the third line, and blocks the second line, and in a second switching position, connects the second line to the third line and blocks the first line.

9. The door closer according to claim 1 and any of the claims 5 to 7, **characterized in that** the directional magnetic valve (1), in a first switching position, connects the first line to the second line, and in a second switching position, connects the second line to the third line and blocks the first line.

10. The door closer according to any of the preceding claims, **characterized in that,** in a non-energized condition, the directional magnetic valve releases the closer spring (56) and, in the energized condition, allows for the free-swing function.

## Revendications

1. Ferme-porte (41), tout particulièrement un ferme-porte de porte tournante, avec une fonction de maintien ouvert ou fonction de roue libre, comportant un boîtier de ferme-porte (42), un arbre de sortie (48) qui est connectable à une porte, un sous-ensemble de pistons (94) connecté à l'arbre de sortie (48) et guidé dans le boîtier de ferme-porte (42), un ressort de fermeture (56), une tige de piston (54) agencée pour la connexion du sous-ensemble de pistons (94) au ressort de fermeture (56), un compartiment de blocage (61) hydraulique aménagé pour bloquer le ressort de fermeture (56), et une soupape magnétique directionnelle (1), du côté du sous-ensemble de pistons (94) détourné de la tige de piston (54) un compartiment d'amortissement de fermeture (58) étant aménagé entre une extrémité frontale du boîtier de ferme-porte (42) et du sous-ensemble de pistons (94), la tige de piston (54) étant fermement connecté à un piston de tension de ressort de fermeture (55), lequel est guidé dans le boîtier de ferme-porte (42) et s'applique contre le ressort de fermeture (56), et dans lequel la soupape magnétique directionnelle (1) pilote au moins les pressions dans le compartiment d'amortissement de fermeture (58) et dans le compartiment de blocage (61),
et dans lequel une première ligne hydraulique mène depuis le compartiment de blocage (61) vers la soupape magnétique directionnelle (1), une deuxième ligne hydraulique mène depuis le compartiment d'amortissement de fermeture (58) vers la soupape magnétique directionnelle (1), et une troisième ligne hydraulique mène de la soupape magnétique directionnelle (1) vers un compartiment réservoir (31), et une cloison de séparation (53) étanche au fluide agencée dans le boîtier de ferme-porte (42) entre le sous-ensemble de pistons (94) et le ressort de fermeture (56), la tige de piston (54) s'étendant de façon étanche au fluide à travers la cloison de séparation (53),
**caractérisé en ce que** la soupape magnétique directionnelle (1) est une soupape 3/2 magnétique directionnelle (1) et la première ligne hydraulique, tout particulièrement une ligne de pression (P), mène depuis le compartiment de blocage (61) vers la soupape magnétique directionnelle (1), la deuxième ligne hydraulique, tout particulièrement une ligne de travail (A), mène depuis le compartiment d'amortissement de fermeture (58) vers la soupape magnétique directionnelle (1), et une troisième ligne hydraulique, tout particulièrement une ligne de réservoir (T), mène depuis la soupape magnétique directionnelle (1) vers le compartiment réservoir (31).

2. Ferme-porte selon la revendication 1, **caractérisé en ce que** l' compartiment de blocage (61) est aménagé entre la cloison de séparation (53) et le piston tendeur de ressort de fermeture (55).

3. Ferme-porte selon l'une des revendications précédentes, **caractérisé en ce que** l'agencement de roue libre est aménagé comme accouplement de coulissement, lequel transmet uniquement des forces de pression entre le ressort de fermeture (56) et le sous-ensemble de pistons (94).

4. Ferme-porte selon l'une des revendications précédentes, **caractérisé en ce que** l'arbre de sortie (48) comporte un contour de roulement (49) en forme de came, tout particulièrement un disc à came, et **en ce que** le sous-ensemble de pistons (94) comporte au moins un galet à cames (47, 50) appliqué contre le contour de roulement (49).

5. Ferme-porte selon l'une des revendications précédentes, **caractérisé par** un compartiment d'amortissement d'ouverture (60) entre le sous-ensemble de pistons (94) et la cloison de séparation (53) ou entre le sous-ensemble de pistons (94) et le piston (95) additionnelle, et une première connexion étranglée (78) entre le compartiment d'amortissement d'ouverture (60) et le compartiment réservoir (31).

6. Ferme-porte selon la revendication 5, **caractérisé par** une première connexion non-étranglée (77) entre le compartiment d'amortissement d'ouverture (60) et le compartiment réservoir (31), la première connexion étranglée (78) étant toujours ouverte et, en fonction de la position du sous-ensemble de pistons (94), la première connexion non-étranglée (77) étant fermée ou ouverte.

7. Ferme-porte selon l'une des revendications précédentes, **caractérisé par** au moins une autre connexion étranglée supplémentaire (75, 76), laquelle est agencée entre le compartiment d'amortissement de fermeture (58) et le compartiment réservoir (31).

8. Ferme-porte selon la revendication 1 et l'une des revendications 5 à 7, **caractérisé en ce que,** dans une première position de commutation, la soupape magnétique directionnelle (1) relie la première ligne à la troisième ligne et bloque la deuxième ligne, et dans une deuxième position de commutation relie la deuxième ligne à la troisième ligne et bloque la première ligne.

9. Ferme-porte selon la revendication 1 et l'une des revendications 5 à 7, **caractérisé en ce que,** dans une première position de commutation, la soupape magnétique directionnelle (1) relie la première ligne à la deuxième, et dans une deuxième position de commutation relie la deuxième ligne à la troisième ligne et bloque la première ligne.

10. Ferme-porte selon l'une des revendications précédentes, **caractérisé en ce que** dans l'état sans courant, la soupape magnétique directionnelle (1) relâche le ressort de fermeture (56) et dans l'état sous tension permet la fonction roue libre.
